# EUROPEAN PATENT APPLICATION

(11) **EP 2 383 824 A1**
(43) Date of publication of application: **02.11.2011**
(21) Application number: 10733383.3
(22) Date of filing: 25.01.2010
(51) Int. Cl.: H01M 8/04, H01M 8/10, H01M 8/12

(54) **FUEL CELL SYSTEM AND METHOD OF OPERATING SAME**

(30) Priority: 23.01.2009 JP 2009012996
(71) Applicant: Panasonic Corporation, Kadoma-shi Osaka 571-8501 (JP)
(72) Inventor: YASUDA, Shigeki, Chuo-ku, Osaka-shi, Osaka 540-6207 (JP); TAMURA, Yoshio, Chuo-ku, Osaka-shi, Osaka 540-6207 (JP); TAGUCHI, Kiyoshi, Chuo-ku, Osaka-shi, Osaka 540-6207 (JP); TANAKA, Yoshikazu, Chuo-ku, Osaka-shi, Osaka 540-6207 (JP)
(74) Representative: Leinweber & Zimmermann
(86) International application number: PCT/JP2010/000402
(87) International publication number: WO 2010/084776

(57) **Abstract**

A fuel cell system of the present invention includes: a fuel cell (1) configured to generate electric power using a hydrogen-containing fuel gas; a combustible gas path (4, 17, la) including a fuel gas channel (la) of the fuel cell;0 a shutoff valve (21) disposed on the combustible gas path, located upstream of the fuel cell, to close when the fuel cell stops generating the electric power; a casing (11) containing the fuel cell, the combustible gas path, and the shutoff valve; a ventilation fan (12) configured to ventilate the casing; a stop unit (51, 52) configured to stop a ventilation operation of the ventilation fan by a manual operation of an operator; and a controller (10) configured to, when leakage of a combustible gas occurs in the casing, execute the ventilation operation of the ventilation fan as long as the ventilation operation is not stopped by the stop unit.

## Description

### Technical Field

The present invention relates to a fuel cell system including a fuel cell configured to generate electric power using a fuel gas and an oxidizing gas and to a method for operating the fuel cell system, and particularly to a stop process of the system when gas leakage has occurred.

### Background Art

A fuel cell system includes: a hydrogen generator configured to perform steam reforming of a raw material, such as a city gas or a LP gas, to generate a hydrogen-rich fuel gas; and a fuel cell configured to generate electric power by an electrochemical reaction between the hydrogen-rich fuel gas generated by the hydrogen generator and an oxidizing gas.

Since the fuel cell system utilizes combustible gases, such as the city gas, the LP gas, and the hydrogen-rich fuel gas, it is important to detect abnormalities early when gas leakage has occurred and to suppress the occurrence of hazardous events, such as fires and explosions.

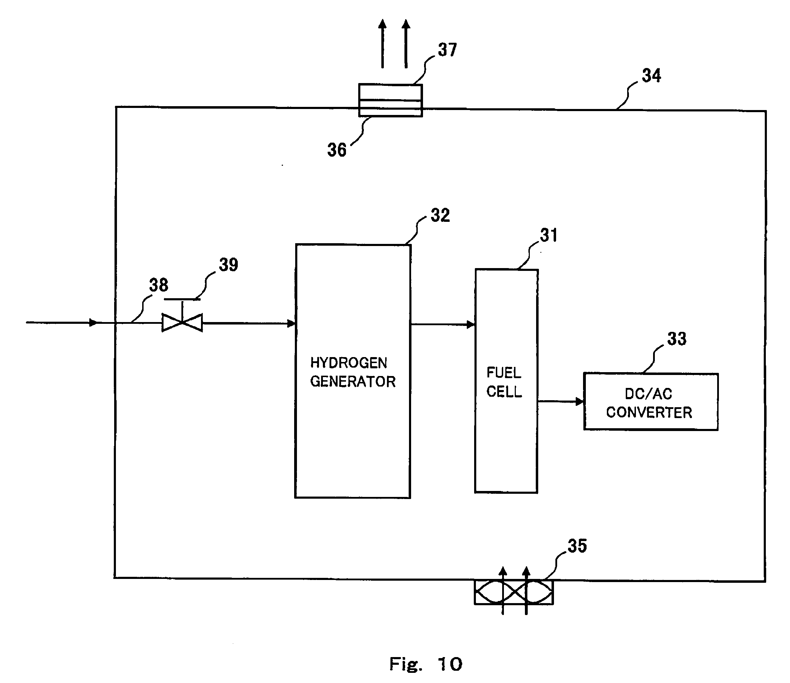

Fig. 10 is a block diagram showing one example of the configuration of a conventional fuel cell system. As shown in Fig. 10, the conventional fuel cell system includes: a fuel cell 31 configured to generate electric power by an electrochemical reaction between the hydrogen-rich fuel gas and the oxidizing gas; a hydrogen generator 32 configured to generate the hydrogen-rich fuel gas from a raw material gas, such as the city gas, to supply the hydrogen-rich fuel gas to the fuel cell 31; a raw material gas supply passage 38 through which the raw material gas is supplied to the hydrogen generator 32; a shutoff valve 39 disposed on the raw material gas supply passage 38 to shut off the supply of the raw material gas; and a DC/AC converter 33 configured to convert DC power from the fuel cell 31 to AC power. The fuel cell 31, the hydrogen generator 32, the DC/AC converter 33, the raw material gas supply passage 38, and the shutoff valve 39 are contained in a casing 34 made of a material, such as a metal. The fuel cell system further includes: a fan 35 configured to suction outside air into the casing 34; an exhaust port 36 through which the outside air having been suctioned into the casing 34 is discharged to the outside of the casing 34; and a gas leakage detector 37 disposed in the vicinity of the exhaust port 36 to detect the leakage of the combustible gas.

In the fuel cell system, for example, if the combustible gas leaks from the hydrogen generator 32 or the fuel cell 31, the leaked combustible gas is discharged by the fan 35 through the exhaust port 36 to the outside of the casing 34, and the leakage of the combustible gas is detected based on a detection signal of the gas leakage detector 37. Here, a technique is known, in which when a combustible gas detector detects the gas leakage, the fuel cell system stops operating, and a ventilator keeps on operating until the concentration of the leaked gas detected by the combustible gas detector becomes a set concentration or lower (see PTL 1, for example).

### Citation List

### Patent Literature

PTL 1: Japanese Laid-Open Patent Application Publication No. 2003-229148

### Summary of Invention

### Technical Problem

In the fuel cell system disclosed in PTL 1, when the combustible gas detector detects the gas leakage, the fuel cell system stops operating, so that the combustible gas does not leak further. In addition, the fan 35 keeps on operating until a detected value of the combustible gas detector becomes the set concentration or lower. Therefore, it is determined that the concentration of the combustible gas leaking to the outside of the casing 34 is reduced to a safe level, and the fan 35 then stops operating.

However, even if the leakage of the combustible gas is detected and the fuel cell system stops operating, the leakage of the combustible gas continues in the casing 34 even after the operation stop of the system in some case. That is, the leakage of the combustible gas continues in a case where a raw material gas supply source in the system is a source, such as a city gas infrastructure or a propane gas bomb, having predetermined supply pressure, and the gas leakage is occurring at a portion of the raw material gas supply passage 38 in the casing 34, the portion being located upstream of the shutoff valve 39. In this case, if the fan 35 is stopped since the detected value of the combustible gas detector decreases, the generation of a combustible gas mixture may proceed in the casing 34 by subsequent continuous leakage of the raw material gas, and this may deteriorate the safety of the system.

The same problem as above may occur in a fuel cell system in which the fuel gas is supplied from not the hydrogen generator but a fuel gas supply source, such as a hydrogen bomb, having predetermined pressure.

The present invention was made to solve the above problems, and an object of the present invention is to provide a fuel cell system, the safety of which when the leakage of the combustible gas has occurred is higher than that of the above conventional fuel cell system, and provide a method for operating the fuel cell system.

### Solution to Problem

In order to solve the above problems, a fuel cell system according to a first aspect of the present invention includes: a fuel cell configured to generate electric power using a hydrogen-containing fuel gas; a combustible gas path including a fuel gas channel of the fuel cell; a shutoff valve disposed on the combustible gas path, located upstream of the fuel cell, to close when the fuel cell stops generating the electric power; a casing containing the fuel cell, the combustible gas path, and the shutoff valve; a ventilation fan configured to ventilate the casing; a stop unit configured to stop a ventilation operation of the ventilation fan by a manual operation of an operator; and a controller configured to, when leakage of a combustible gas occurs in the casing, execute the ventilation operation of the ventilation fan as long as the stop unit does not stop the ventilation operation.

In accordance with this configuration, even in a case where the combustible gas leakage from the combustible gas supply passage located upstream of the shutoff valve in the casing continues in a state where the shutoff valve on the combustible gas path located upstream of the fuel cell is closed, the ventilation operation of the ventilation fan continues with the exception that the ventilation operation of the ventilation fan is stopped such that the maintenance man manually operates the stop unit after the maintenance man has arrived. Therefore, the combustible gas continuously leaking is diffused and discharged to the outside of the casing through the ventilation fan. Therefore, the safety of the fuel cell system of the present invention when the leakage of the combustible gas has occurred is higher than that of the conventional fuel cell system.

In addition, the maintenance man can perform the maintenance work under safer situations than before. This leads to the ease of maintenance.

The fuel cell system according to a second aspect of the present invention may be configured such that in the fuel cell system according to the first aspect of the present invention, the combustible gas path includes a fuel gas supply passage through which the fuel gas flows, the fuel gas being supplied from a fuel gas supply source to the fuel cell, the fuel gas source having positive supply pressure; the shutoff valve is disposed on the fuel gas supply passage; and the controller is configured such that: in a case where the combustible gas leakage is gas leakage from the combustible gas path located upstream of the shutoff valve in the casing, the controller continues the ventilation operation as long as the ventilation operation is not stopped by the stop unit; and in a case where the combustible gas leakage is gas leakage from the combustible gas path located downstream of the shutoff valve in the casing, the controller stops the ventilation operation even if the ventilation operation is not stopped by the stop unit.

In accordance with this configuration, in a case where it is highly likely that the gas leakage from the combustible gas path located upstream of the shutoff valve is occurring, the fuel gas leakage is more likely to continue even with the shutoff valve closed. Therefore, for the improvement of the safety, the ventilation operation of the ventilation fan continues as long as the ventilation operation is not stopped by the stop unit. In contrast, in a case where it is highly likely that the gas leakage from the combustible gas path located downstream of the shutoff valve is occurring, the fuel gas leakage is less likely to continue with the shutoff valve closed. Therefore, the ventilation operation of the ventilation fan is stopped even if the ventilation operation is not stopped by the stop unit. Thus, the electric power consumption of the ventilation fan is reduced. With this, when the leakage of the combustible gas occurs, the efficiency of the fuel cell system improves while suppressing safety deterioration as compared to a case where the operation of the ventilation fan continues regardless of whether or not the fuel gas leakage continues with the shutoff valve closed.

The fuel cell system according to a third aspect of the present invention may be configured such that the fuel cell system according to the first aspect of the present invention further includes: a hydrogen generator configured to generate the fuel gas from a raw material gas, the fuel gas being used for electric power generation of the fuel cell, wherein: the combustible gas path includes a raw material gas supply passage through which the raw material gas flows, the raw material gas being supplied from a raw material gas supply source to the hydrogen generator, the raw material gas source having positive supply pressure; the shutoff valve is disposed on the raw material gas supply passage; and the controller is configured such that: in a case where the combustible gas leakage is gas leakage from the combustible gas path located upstream of the shutoff valve in the casing, the controller continues the ventilation operation as long as the ventilation operation is not stopped by the stop unit; and in a case where the combustible gas leakage is gas leakage from the combustible gas path located downstream of the shutoff valve in the casing, the controller stops the ventilation operation even if the ventilation operation is not stopped by the stop unit.

In accordance with this configuration, in a case where it is highly likely that the gas leakage from the combustible gas path located upstream of the shutoff valve is occurring, the leakage of the combustible gas (raw material gas) is more likely to continue with the shutoff valve closed. Therefore, for the improvement of the safety, the ventilation operation of the ventilation fan continues as long as the ventilation operation is not stopped by the stop unit. In contrast, in a case where it is highly likely that the gas leakage from the combustible gas path located downstream of the shutoff valve is occurring, the leakage of the combustible gas is less likely to continue with the shutoff valve closed. Therefore, the generation of the combustible gas mixture is less likely to proceed. On this account, the ventilation operation of the ventilation fan is stopped even if the ventilation operation is not stopped by the stop unit. Thus, the electric power consumption of the ventilation fan is reduced. With this, when the leakage of the combustible gas occurs, the efficiency of the fuel cell system improves while suppressing the safety deterioration as compared to a case where the operation of the ventilation fan continues regardless of whether or not the combustible gas leakage continues with the shutoff valve closed.

The fuel cell system according to a fourth aspect of the present invention may be configured such that the fuel cell system according the second or third aspect of the present invention further includes: a water path; and a heater configured to heat the water path, wherein the controller is configured to cause the heater to operate as an antifreezing operation of the water path.

In accordance with this configuration, in a case where the ventilation fan operates under the low-temperature environment which requires the antifreezing operation of the water path, the outside cool air is introduced into the casing, and the ambient temperature in the casing further decreases. Therefore, the power consumption of the heater necessary to prevent freezing increases. However, as above, the fuel cell system is configured such that in a case where it is less likely that the leakage of the combustible gas continues with the shutoff valve closed as the stop process of the fuel cell system, the operation of the ventilation fan is stopped even if the ventilation operation is not stopped by the stop unit. With this configuration, the power consumption of the heater during the antifreezing operation is reduced as compared to a case where the operation of the ventilation fan continues regardless of whether or not the leakage of the combustible gas continues with the shutoff valve closed.

A method for operating a fuel cell system according to a fifth aspect of the present invention is a method for operating a fuel cell system, the fuel cell system including: a fuel cell configured to generate electric power using a hydrogen-containing fuel gas; a combustible gas path including a fuel gas channel of the fuel cell; a shutoff valve disposed on the combustible gas path, located upstream of the fuel cell, to close when the fuel cell stops generating the electric power; a casing containing the fuel cell, the combustible gas path, and the shutoff valve; and a ventilation fan configured to ventilate the casing, the method including the step of, when leakage of a combustible gas occurs in the casing, executing a ventilation operation of the ventilation fan as long as the ventilation operation is not stopped by a manual operation of an operator.

The above object, other objects, features and advantages of the present invention will be made clear by the following detailed explanation of preferred embodiments with reference to the attached drawings.

### Advantageous Effects of Invention

The present invention is configured as explained above, and the safety of the fuel cell system of the present invention when the leakage of the combustible gas has occurred is higher than that of the conventional fuel cell system.

### Brief Description of Drawings

[Fig. 1] Fig. 1 is a block diagram showing the configuration of a fuel cell system according to Embodiment 1 of the present invention.
[Fig. 2A] Fig. 2A is a flow chart showing steps of a gas leakage abnormality process in the fuel cell system of Fig. 1.
[Fig. 2B] Fig. 2B is a flow chart showing steps of the gas leakage abnormality process in a stop state of the fuel cell system according to Modification Example 1 of Embodiment 1 of the present invention.
[Fig. 3A] Fig. 3A is a block diagram showing the configuration of the fuel cell system according to Embodiment 2 of the present invention.
[Fig. 3B] Fig. 3B is a flow chart showing steps of the gas leakage abnormality process of the fuel cell system according to Embodiment 2 of the present invention.
[Fig. 3C] Fig. 3C is a block diagram showing the configuration of the fuel cell system according to Modification Example of Embodiment 2 of the present invention.
[Fig. 4] Fig. 4 is a block diagram showing the configuration of the fuel cell system according to Embodiment 3 of the present invention.
[Fig. 5] Fig. 5 is a flow chart showing steps of a first gas leakage abnormality process.
[Fig. 6] Fig. 6 is a flow chart showing steps of a second gas leakage abnormality process.
[Fig. 7] Fig. 7 is a block diagram showing Modification Example 1 of a second gas leakage detector 26 in the fuel cell system of Embodiment 3 of the present invention.
[Fig. 8] Fig. 8 is a block diagram showing the configuration of the fuel cell system according to Embodiment 4 of the present invention.
[Fig. 9] Fig. 9 is a block diagram showing the configuration of the fuel cell system according to another Modification Example of Embodiment of the present invention.
[Fig. 10] Fig. 10 is a block diagram showing the configuration of the fuel cell system of a conventional example.

### Description of Embodiments

Hereinafter, preferred embodiments of the present invention will be explained in reference to the drawings. In the following description and the drawings, the same reference signs are used for the same or corresponding components, and a repetition of the same explanation is avoided.

### Embodiment 1

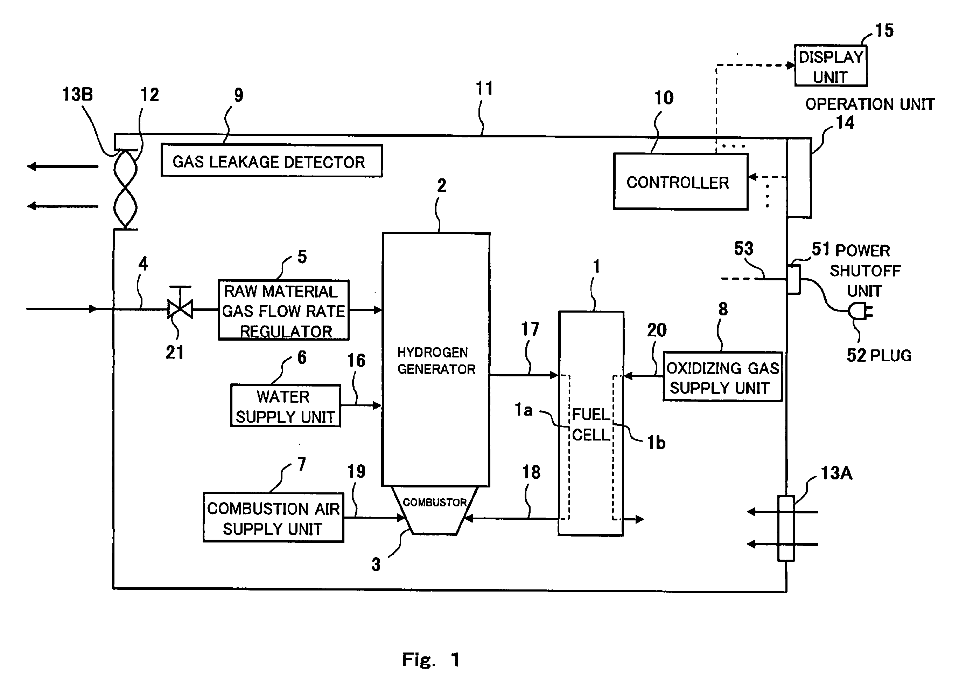

Fig. 1 is a block diagram showing the configuration of a fuel cell system according to Embodiment 1 of the present invention.

As shown in Fig. 1, the fuel cell system of the present embodiment includes, as major components, a fuel cell 1, a hydrogen generator 2, a combustor 3, a raw material gas supply passage 4, a raw material gas regulator 5, a water supply unit 6, a combustion air supply unit 7, an oxidizing gas supply unit 8, a gas leakage detector 9, a controller 10, a casing 11, a ventilation fan 12, a shutoff valve 21, a power shutoff unit 51, and a plug 52.

A fuel gas channel 1a and an oxidizing gas channel 1b are formed in the fuel cell 1. An anode (not shown) is provided so as to be exposed to a fuel gas flowing through the fuel gas channel 1a, and a cathode (not shown) is provided so as to be exposed to an oxidizing gas flowing through the oxidizing gas channel 1b. The fuel cell 1 generates electric power using a hydrogen-containing fuel gas supplied to the anode and the oxidizing gas supplied to the cathode. Therefore, the fuel cell 1 may be any fuel cell as long as it generates electric power by using the hydrogen-containing fuel gas as a reducing gas and causing the hydrogen-containing fuel gas to react with the oxidizing gas. For example, a polymer electrolyte fuel cell, a phosphoric acid fuel cell, a molten carbonate fuel cell, or a solid oxide fuel cell can be used as the fuel cell 1.

The hydrogen generator 2 generates a hydrogen-rich fuel gas by a steam-reforming reaction between a raw material gas and steam and supplies the hydrogen-rich fuel gas through a fuel gas supply passage 17 to the fuel gas channel 1a of the fuel cell 1. In the present embodiment, the hydrogen generator 2 includes: a reformer (not shown) configured to generate a hydrogen-rich reformed gas by the steam-reforming reaction between the raw material gas and steam supplied from outside; a shift converter (not shown) configured to perform a shift reaction such that the steam and carbon monoxide gas in the reformed gas generated by the reformer are converted into a hydrogen gas and a carbon dioxide gas; a selective oxidizer (not shown) configured to oxidize carbon monoxide in the reformed gas, subjected to the shift reaction by the shift converter, to reduce a carbon monoxide concentration to a predetermined concentration (10 ppm, for example) or lower and supply this reformed gas as the fuel gas to the outside.

A downstream end of the raw material gas supply passage 4 is connected to the hydrogen generator 2 (to be precise, the reformer). An upstream end of the raw material gas supply passage 4 is connected to a raw material gas supply source. The shutoff valve 21 and the raw material gas flow rate regulator 5 are disposed on the raw material gas supply passage 4 in this order from the upstream side. The raw material gas may be any gas as long as it contains an organic compound composed of at least carbon and hydrogen. For example, a natural gas, a city gas, a butane gas, or a propane gas can be used as the raw material gas. Examples of the raw material gas supply source are a raw material gas infrastructure having positive supply pressure with respect to atmospheric pressure and a raw material gas bomb having positive supply pressure with respect to atmospheric pressure. Specific examples of the raw material gas supply source are a natural gas infrastructure, a city gas infrastructure, a butane gas bomb, and a propane gas bomb. The shutoff valve 21 opens and closes to allow and block the flow of the raw material gas in the raw material gas supply passage 4.
The shutoff valve 21 is constituted by, for example, an on-off valve. In the present embodiment, one shutoff valve 21 is disposed on the raw material gas supply passage 4 in the casing 11. However, in a case where a plurality of shutoff valves are disposed on the raw material gas supply passage 4 in the casing 11, an extreme upstream shutoff valve among the shutoff valves configured to close at the time of the operation stop of the fuel cell system is defined as the shutoff valve 21. The raw material gas flow rate regulator 5 regulates the flow rate of the raw material gas in the raw material gas supply passage 4. In the present embodiment, the raw material gas flow rate regulator 5 is constituted by a booster (not shown) configured to boost the supply pressure of the raw material gas and an regulating valve (not shown) configured to regulate the flow rate of the raw material gas which has been increased in pressure. The booster is constituted by, for example, a plunger pump. The regulating valve is constituted by, for example, a flow rate control valve.

The water supply unit 6 is connected to the hydrogen generator 2 via a water supply passage 16. The water supply unit 6 supplies water through the water supply passage 16 to the hydrogen generator 2. The water supply unit is constituted by, for example, a water tank and a feed pump.

The hydrogen generator 2 (to be precise, the reformer) is configured to be heated by the combustor 3. The unconsumed fuel gas (off gas) discharged from the fuel gas channel 1a in the fuel cell 1 is supplied through an off gas supply passage 18 to the combustor 2, and combustion air is supplied from the combustion air supply unit 7 through a combustion air supply passage 19 to the combustor 3. The combustor 3 combusts the off gas using the combustion air to heat the hydrogen generator 2 by this combustion heat.

The oxidizing gas supply unit 8 supplies the oxidizing gas through an oxidizing gas supply passage 20 to the oxidizing gas channel 1b of the fuel cell 1. In the present embodiment, air is used as the oxidizing gas. The oxidizing gas supply unit 8 is constituted by, for example, a blower.

The gas leakage detector 9 has a function of detecting the leakage of the combustible gas in the casing 11. In the present embodiment, the gas leakage detector 9 is constituted by a combustible gas sensor configured to detect the concentration of the combustible gas. The combustible gas sensor is, for example, a contact burning-type sensor. The contact burning-type sensor includes a detector element configured such that a platinum wire coil through which a constant current flows is embedded in a carrier supporting a catalyst. In accordance with this configuration, if the detector element is exposed to the combustible gas, the combustible gas having contacted the detector element is combusted by the catalyst, and this increases the temperature of the platinum wire coil. Thus, the electrical resistance of the platinum wire coil changes, and a voltage (output voltage) across both ends of the platinum wire coil changes depending on the change in the electrical resistance. As a result, the contact burning-type sensor outputs a voltage corresponding to the gas concentration. The gas leakage detector 9 may be constituted by one gas leakage detector. To improve an ability to detect the gas leakage, the gas leakage detector 9 may be constituted by a combination of a plurality of gas leakage detectors. For example, in a case where the gas leakage detector 9 is constituted by the combustible gas sensors, the gas leakage detector 9 capable of detecting many types of gases can be configured by using a plurality of combustible gas sensors configured to detect different types of gases. In the present embodiment, the gas leakage detector 9 is provided in the vicinity of the ventilation fan 12 in the casing 11.

The casing 11 contains major components of the fuel cell system, that is, contains the fuel cell 1, the hydrogen generator 2, the combustor 3, the raw material gas supply passage 4, the raw material gas regulator 5, the water supply unit 6, the combustion air supply unit 7, the oxidizing gas supply unit 8, the gas leakage detector 9, the shutoff valve 21, and the controller 10. The controller 10 may be provided outside the casing 11. The casing 11 is made of, for example, a metal material. The casing 11 is provided with an intake port 13A through which the outside air is suctioned into the casing 11 and an exhaust port 13B through which the air in the casing 11 is discharged to the outside. The ventilation fan 12 is provided at the exhaust port 13B. With this configuration, when the ventilation fan 12 operates, the outside air is suctioned through the intake port 13A into the casing 11, flows through the inside of the casing 11, and is discharged through the exhaust port 13B to the outside of the casing 11. Thus, the inside of the casing 11 is ventilated. Even if the combustible gas leaks in the casing 11, the leaked gas is immediately discharged to the outside of the casing 11 by the ventilation fan 12. It is preferable that the intake port 13A and the exhaust port 13B be formed on the casing 11 and located at positions opposed to each other such that the outside air suctioned through the intake port 13A flows through the inside of the casing 11 as entirely as possible.

The controller 10 includes a calculating portion and a storage portion. The calculating portion reads out and executes a predetermined program stored in the storage portion. Thus, the controller 10 controls the operations of the entire fuel cell system. Specifically, the controller 10 receives required detection information from a required detector of the fuel cell system. Based on the detection information, the controller 10 controls required components of the fuel cell system including the shutoff valve 21, the raw material gas flow rate regulator 5, the water supply unit 6, the combustion air supply unit 7, and the oxidizing gas supply unit 8 to control the operations of the fuel cell system. Especially in the present embodiment, the controller 10 performs a gas leakage abnormality process based on a detection output of the gas leakage detector 9. Here, in the present invention, the controller denotes one controller or a group of a plurality of controllers. Therefore, the controller 10 does not necessarily have to be constituted by one controller and may be constituted by a plurality of controllers which are dispersively arranged and cooperate to control the fuel cell system. Therefore, for example, the controller 10 may perform only the above-described gas leakage abnormality process, and the other controllers may control the operations of the entire fuel cell system.

The controller 10 is constituted by, for example, a microcomputer, the calculating portion is constituted by a CPU of the microcomputer, and the storage portion is constituted by an internal memory (a ROM, a RAM, a hard disk, or the like) of the microcomputer.

An operation unit 14 to which an operator inputs information, such as commands, set data, and the like regarding the operations of the fuel cell system is provided on an outer surface of the casing 11. The information having been input via the operation unit 14 is input to and suitably processed in the controller 10. Thus, the operations, settings, and the like of the fuel cell system are performed.

In addition, the power shutoff unit 51 is provided on the outer surface of the casing 11. The power shutoff unit 51 is disposed on an electric power supply path 53 through which operation electric power is supplied to respective components 3, 5, 6, 7, 8, 9, 10, 12, 14, 15, and 21 constituting the fuel cell system. The power shutoff unit 51 is provided with an operating portion operated by the operator. By operating the operating portion by the operator, the connection between the commercial power supply and the electric power supply path 53 can be cut (open) and established (close). The plug 52 is provided at an upstream end of the electric power supply path 53. By inserting the plug 52 into an outlet (socket, not shown) connected to the commercial power supply, the electric power is supplied from the commercial power supply to the electric power supply path 53. In a case where the ventilation fan 12 is activated at least after stopping the electric power generation of the fuel cell 1, the electric power supplied from the commercial power supply through the electric power supply path 53 is used. Therefore, the ventilation operation of the ventilation fan 12 can be stopped by operating the power shutoff unit 53 by the operator. By pulling out the plug 52 from the outlet, the supply of the operation electric power to the ventilation fan 12 can be stopped. Here, each of the power shutoff unit 53 and the plug 52 is one example of "a stop unit configured to stop the ventilation operation of the ventilation fan 12 by a manual operation of the operator" in the present invention. In the fuel cell system of the present embodiment, both the power shutoff unit 53 and the plug 52 are provided. However, only the plug 52 may be provided.

Here, the "stop unit" will be explained. The "stop unit" may be any unit as long as it stops the ventilation operation of the ventilation fan by the manual operation of the operator. There are at least following two modes each for "stopping the ventilation operation of the ventilation fan by the manual operation of the operator". A first mode is a mode in which the supply of the electric power to the ventilation fan is physically cut by the manual operation of the operator. Using the power shutoff unit 51 and the plug 52 as described above is one example of the first mode. A second mode is a mode in which a command for stopping the ventilation operation of the ventilation fan is input to a controller by the manual operation of the operator, and the ventilation operation of the ventilation fan is stopped by the controller based on the command. In the second mode, for example, the controller may be configured to cut the supply of the electric power to the ventilation fan by turning off a switch disposed on the electric power supply path 53 extending to the ventilation fan, or the controller may be configured to cause the rotating speed of the ventilation fan to become zero.

The fuel cell system includes a display unit 15 configured to inform of an abnormality when the abnormality has occurred in the fuel cell system. Used as the display unit 15 is, for example, a liquid crystal panel.

Next, the operations of the fuel cell system configured as above (a method for operating the fuel cell system) will be explained. The below-explained operations of the fuel cell system are executed by the control of the controller 10 unless otherwise noted.

In the fuel cell system of the present embodiment configured as above, a "combustible gas path" is constituted by the raw material gas supply passage 4, the hydrogen generator 2, the fuel gas passage 17, the fuel gas channel 1a of the fuel cell 1, and the off gas supply passage 18. The raw material gas source is one example of a combustible gas source configured to supply the combustible gas flowing through the "combustible gas path" and have positive supply pressure.

First, common operations will be briefly explained. The fuel cell system has four operating modes that are a start-up process, an electric power generating operation, a stop process, and a stop state. These four operating modes are executed by the control of the controller 10. The start-up process is an operation of safely and smoothly starting up the fuel cell system and shifting to the electric power generating operation. The electric power generating operation is an operation of generating electric power. The stop process is an operation of safely and smoothly stopping the electric power generating operation of the fuel cell system and shifting to the stop state. The stop state is a state where the components directly related to the electric power generation have stopped but the controller 10 is operating. There are two types of stop states that are a stand-by state where the fuel cell system stands by for the next start-up and an abnormality stop state which cannot shift to the stand-by state until an abnormal state by maintenance work or the like is canceled.

In Fig. 1, the fuel cell system starts up by a start-up control signal output from the controller 10. The controller 10 outputs the start-up control signal, for example, when load power detected by a load power detector, not shown, becomes a predetermined value or more or when an operation command is input to the controller 10 from the operation unit 14. Specifically, the controller 10 first outputs an open command to the shutoff valve 21 and then outputs activation commands to the raw material gas flow rate regulator 5, the water supply unit 6, the combustion air supply unit 7, the oxidizing gas supply unit 8, and the ventilation fan 12. The controller 10 causes the raw material gas flow rate regulator 5 to supply the raw material gas through the raw material gas supply passage 4 to the hydrogen generator 2. The controller 10 causes the water supply unit 6 to supply the water through the water supply passage 16 to the hydrogen generator 2. Further, only at the time of the start-up, the controller 10 supplies the raw material gas or the hydrogen-rich fuel gas generated by the hydrogen generator 2 through a passage, not shown, to the combustor 3 and causes the combustion air supply unit 7 to supply the combustion air through the combustion air supply passage 19 to the combustor 3, thereby supplying the combustion heat to the hydrogen generator 2.

With this, in the hydrogen generator 2, the water supplied from the water supply unit 6 is evaporated by the combustion heat supplied from the combustor 3 to generate the steam, and the steam-reforming reaction between the raw material gas whose flow rate has been regulated by the raw material gas flow rate regulator 5 and the steam is performed by utilizing the combustion heat supplied from the combustor 3. Thus, the hydrogen generator 2 generates the hydrogen-rich fuel gas. Then, the hydrogen-rich fuel gas is supplied to the fuel gas channel 1a of the fuel cell 1, and the air as the oxidizing gas is supplied from the oxidizing gas supply unit 8 to the oxidizing gas channel 1b of the fuel cell 1.

In the fuel cell 1, these supplied gases react with each other to generate electric power. The hydrogen-rich fuel gas unconsumed in the fuel cell 1 is supplied through the off gas supply passage 18 to the combustor 3 and is combusted by using the combustion air supplied through the combustion air supply passage 19. At this moment, the supply of the raw material gas through the passage, not shown, to the combustor 3 or the supply of the hydrogen-rich fuel gas generated by the hydrogen generator 2 to the combustor 3 is stopped by the controller 10.

With this, the electric power generation is performed by the fuel cell 1 in the fuel cell system. Moreover, the ventilation fan 12 is operating.

When the controller 10 outputs an operation stop control signal, the fuel cell system starts the stop process. The controller 10 outputs the operation stop control signal, for example, when the load power detected by the load power detector, not shown, becomes less than the predetermined value or when an operation stop command is input from the operation unit 14 by the operation of a user. Specifically, the controller 10 outputs stop commands to the raw material gas flow rate regulator 5, the water supply unit 6, the combustion air supply unit 7, and the oxidizing gas supply unit 8 and then outputs a close command to the shutoff valve 21. With this, the raw material gas flow rate regulator 5, the water supply unit 6, the combustion air supply unit 7, and the oxidizing gas supply unit 8 stop, and the shutoff valve 21 closes. Then, the controller 10 outputs the stop command to the ventilation fan 12. Thus, the ventilation fan 12 stops. With this, the fuel cell system becomes the stop state (stand-by state).

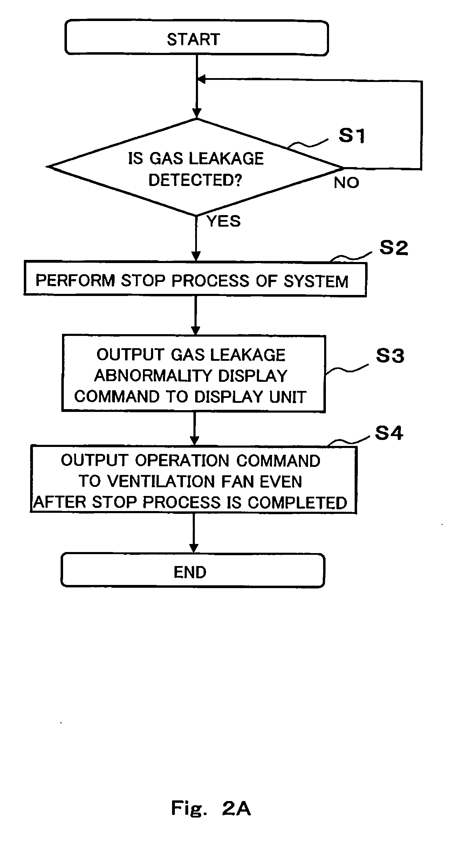

Next, the gas leakage abnormality process that is a characteristic operation of the present embodiment will be explained in reference to Fig. 2A.

Fig. 2A is a flow chart showing steps of the gas leakage abnormality process of the fuel cell system of Fig. 1. Fig. 2A shows only the steps executed by the control of the controller 10 in the gas leakage abnormality process. The controller 10 executes the gas leakage abnormality process in such a manner that the calculating portion reads out and executes a gas leakage abnormality process program stored in the storage portion. The gas leakage abnormality process is executed during the operation of the fuel cell system, that is, during at least one of the start-up process, the electric power generation, and the stop process.

During the operation of the fuel cell system, the controller 10 determines whether or not the gas leakage is detected (Step S1). Specifically, when the output voltage of the gas leakage detector 9 is a predetermined threshold or higher, the controller 10 determines that the gas leakage (leakage of the combustible gas in the casing 11) is detected. In contrast, when the output voltage of the detector 9 is lower than the predetermined threshold, the controller 10 determines that the gas leakage is not detected. When the gas leakage is not detected (No in Step S1), the controller 10 returns to Step S1 and again determines whether or not the gas leakage is detected. Therefore, in this case, the operation of the fuel cell system continues.

In contrast, when the gas leakage is detected, the fuel cell system starts the gas leakage abnormality process. Specifically, the controller 10 starts the stop process of the fuel cell system (Step S2).

Next, the controller 10 outputs a gas leakage abnormality display command to the display unit 15 (Step S3). With this, the display unit 15 performs display indicating that the gas leakage abnormality has occurred. With this, the user is informed of the occurrence of the gas leakage abnormality. As a result, the user who has confirmed the gas leakage abnormality display on the display unit 15 calls a maintenance man.

Then, a predetermined operation as the stop process is executed, and the stop process of the fuel cell system is completed. In the stop process, the shutoff valve 21 is closed, and the ventilation operation of the ventilation fan 12 is executed. Even after the stop process of the fuel cell system is completed, the controller 10 outputs the operation command to the ventilation fan 12 (Step S4). With this, the ventilation operation of the ventilation fan 12 is executed. Even after the stop process is completed, the controller 10 outputs the gas leakage abnormality display command, so that the display unit 15 continues the gas leakage abnormality display. Since this stop state is the abnormality stop state, the controller 10 is set so as not to allow the next start-up of the fuel cell system. Therefore, even if the user inputs an operation start command via the operation unit 14, the operation of the fuel cell system does not start. Moreover, the ventilation operation of the ventilation fan 12 may be a continuous ventilation operation in which the ventilation fan 12 operates continuously or may be an intermittent ventilation operation in which an operation period of the ventilation fan 12 and a stop period of the ventilation fan 12 are repeated periodically.

After that, the maintenance man arrives at the installation location of the fuel cell system and performs the maintenance work for the gas leakage abnormality. At this time, the maintenance man operates the operating portion of the power shutoff unit 51 as the stop unit to stop the supply of the electric power from the commercial power supply to the electric power supply path 53. With this, the operation of the ventilation fan 12 stops. Instead of operating the power shutoff unit 51, the maintenance man may pull out the plug 52 as the stop unit from the outlet to stop the operation of the ventilation fan 12. By operating the power shutoff unit 51 or the plug 52 as the stop unit, the electric power to the controller 10 from the power supply is also cut, so that the controller 10 stops, and the gas leakage abnormality stop process (Step S4) by the controller 10 is aborted. With this, the display operation of the display unit 15 stops, and the gas leakage abnormality display disappears.

As above, in the fuel cell system of the present embodiment, by physically cutting the supply of the electric power from the commercial power supply to the fuel cell system by the manual operation of the maintenance man using the stop unit (the power shutoff unit 51 or the plug 52), the ventilation operation of the ventilation fan stops, and the gas leakage abnormality display of the display unit 15 stops. Thus, the gas leakage abnormality process is completed. In the foregoing, the completion of the stop operation other than the stop operation of the ventilation operation of the ventilation fan 12 is regarded as the completion of the stop process. However, the stop of the ventilation operation of the ventilation fan 12 by the stop unit (the power shutoff unit 51 or the plug 52) may be regarded as the completion of the stop process. Moreover, in the fuel cell system of the present embodiment, the gas leakage abnormality process is uniformly executed regardless of whether or not a portion from which the gas leaks is a place where the gas leakage is likely to continue even after the completion of the stop process, that is, regardless of whether or not the portion from which the gas leaks is located upstream of the shutoff valve 21.

When the repair of the gas leakage abnormality is completed, and the maintenance man establishes the connection between the electric power supply path 53 and the commercial power supply by the stop unit (the power shutoff unit 51 or the plug 52), the controller 10 starts up. Then, when the maintenance man inputs an abnormality cancel command via the operation unit 14, the controller 10 changes the state of the fuel cell system from a state (abnormality stop state) where the start-up is not allowed to a state (stand-by state) where the start-up is allowed. With this, when the operation start command is input by the maintenance man or the user via the operation unit 14, the controller 10 can output the operation start command to start the start-up process of the fuel cell system.

In the foregoing, by inputting the abnormality cancel command via the operation unit, the controller 10 changes the state of the fuel cell system from the state where the start-up is not allowed to the state where the start-up is allowed. However, by establishing the connection between the electric power supply path 53 and the commercial power supply by the stop unit (the power shutoff unit 51 or the plug 52), the controller 10 may change (initialize) the state of the fuel cell system from the state where the start-up is not allowed and which is a state before the connection between the commercial power supply and the electric power supply path 53 is cut, to the state where the start-up is allowed. In the foregoing, the ventilation fan executes the ventilation operation during the electric power generation of the fuel cell system. However, the ventilation fan may not execute the ventilation operation during the electric power generation of the fuel cell system.

In accordance with the above gas leakage abnormality process, at the moment when the stop process of the fuel cell system is completed, the shutoff valve 21 has already been closed in the stop process. However, in a case where the gas leakage occurs at a portion of the raw material gas supply passage, the portion being located upstream of the shutoff valve 21, the gas leakage continues even after the shutoff valve 21 is closed in the stop process. This is because the raw material gas supply source has the supply pressure. Even if the gas leakage continues, the progress of the generation of a combustible gas mixture in the casing 11 can be suppressed as long as the ventilation fan is operating. However, if the ventilation fan stops operating before the maintenance man arrives, the generation of the combustible gas mixture in the casing 11 proceeds, which is not preferable in terms of safety.

Here, in the present embodiment, in a case where the gas leakage detector 9 detects the leakage of the combustible gas, the ventilation fan operates until the supply of the electric power to the ventilation fan 12 is stopped by the manual operation of the stop unit (the power shutoff unit 51 or the plug 52) (in other words, the ventilation operation of the ventilation fan 12 continues as long as the ventilation operation is not stopped by the stop unit). Therefore, the inside of the casing 11 is ventilated until the maintenance man arrives, and the leaked combustible gas is diffused and discharged to the outside of the casing 11 in a diluted state.

Therefore, even in a case where the gas leakage has occurred at a portion of the raw material gas supply passage, the portion being located upstream of the shutoff valve 21 (even in the case of a first gas leakage), the progress of the generation of the combustible gas mixture in the casing 11 is suppressed, so that the safety of the fuel cell system of the present invention is higher than that of the conventional fuel cell system.

In the foregoing, the ventilation operation of the ventilation fan 12 during the stop (that is at least one of a normal stop and the abnormality stop due to an abnormality different from the abnormality of the leakage of the combustible gas) different from the abnormality stop due to the abnormality of the leakage of the combustible gas is arbitrarily controlled. This is because this control does not affect on the safety of the fuel cell system in a case where the leakage of the combustible gas has occurred. To be specific, the same process as the gas leakage abnormality process may be executed, or the controller may be configured to stop the ventilation operation of the ventilation fan 12 even if the ventilation operation of the ventilation fan 12 is not stopped by the "stop unit".

Next, Modification Example of the present embodiment will be explained.

### Modification Example 1

The fuel cell system of Modification Example 1 executes the gas leakage abnormality process not only during the operation (at least one of the start-up process, the electric power generation, and the stop process) but also during the stop state.

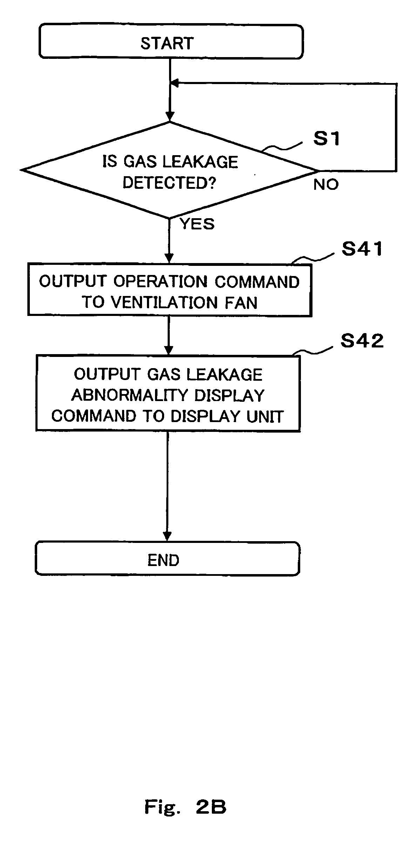

Fig. 2B is a flow chart showing steps of the gas leakage abnormality process in the stop state of the fuel cell system according to Modification Example 1 of Embodiment 1 of the present invention.

As shown in Fig. 2B, in the stop state, the controller 10 monitors whether or not the gas leakage is detected (Step S1). When the controller 10 determines that the leakage of the combustible gas is detected (Yes in Step S1), it starts the operation of the ventilation fan 12 (Step S41). With this, the ventilation operation of the ventilation fan 12 is executed. Moreover, the controller 10 outputs the gas leakage abnormality display command to cause the display unit 15 to display the gas leakage abnormality (Step S42).

With this, the gas leakage abnormality process in the stop state terminates. The operation of the ventilation fan 12 and the display of the gas leakage abnormality may be performed in the reverse order.

The subsequent process by the maintenance man is the same as the above-described basic mode (Figs. 1 and 2A).

In accordance with Modification Example 1, even in the stop state, the progress of the generation of the combustible gas mixture in the casing 11 is suppressed, so that the safety of the fuel cell system of Modification Example 1 is higher than that of the conventional fuel cell system.

### Embodiment 2

The fuel cell system of Embodiment 2 of the present invention is configured such that: the fuel cell system according to the above basic mode or Modification Example 1 includes an operation unit via which a command (hereinafter referred to as a "ventilation operation stop command") for stopping the ventilation operation of the ventilation fan 12 is input to the controller by the manual operation of the operator; and when the leakage of the combustible gas occurs, the controller executes the ventilation operation of the ventilation fan as long as the ventilation operation stop command is not input to the controller.

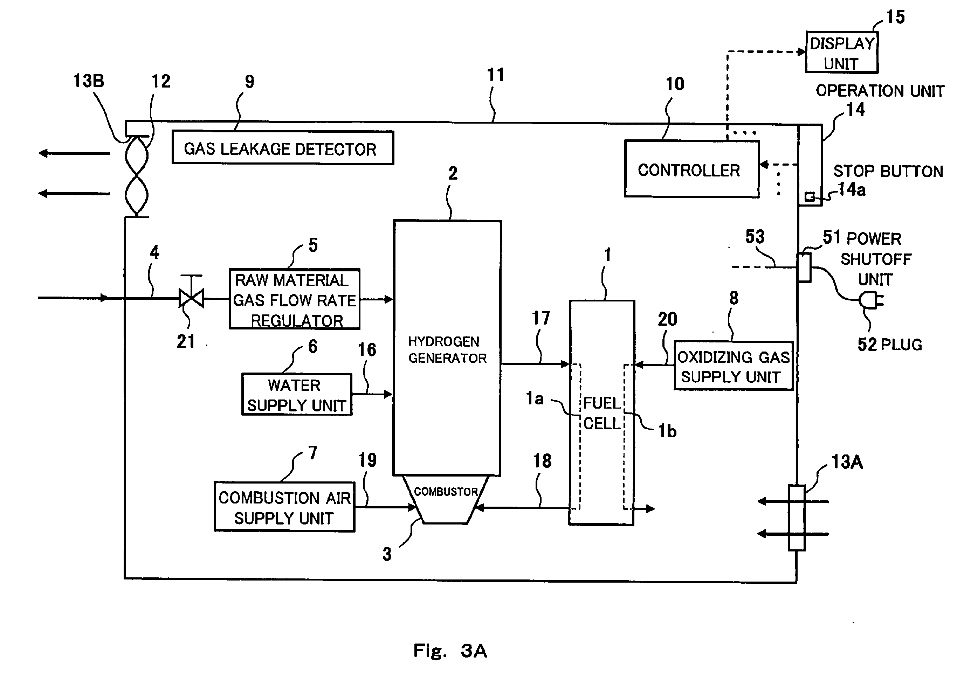

Fig. 3A is a block diagram showing the configuration of the fuel cell system of Embodiment 2.

As shown in Fig. 3A, in the fuel cell system of Embodiment 2, the operation unit 14 is provided with a stop button 14a to which the above-described abnormality cancel command is input. When the operator operates the stop button 14a, an abnormality cancel signal as a stop command (ventilation operation stop command) for stopping the ventilation operation of the ventilation fan 12 is input to the controller 10. When the abnormality cancel signal is input to the controller 10, the controller 10 stops the ventilation operation of the ventilation fan 12. Thus, the ventilation fan 12 stops. Therefore, in Embodiment 2, the operation unit 14 and the controller 10 constitute the "stop unit".

Specifically, for example, the ventilation fan 12 includes a fan (12) and a motor (not shown) configured to drive the fan, and a switch is provided on a path through which electric power is supplied from the electric power supply path 53 to the motor. When the switch is turned on by the control of the controller 10, the electric power is supplied to the motor. Thus, the motor drives the fan, and the ventilation operation of the ventilation fan 12 is executed. In contrast, when the switch is turned off by the control of the controller 10, the supply of the electric power to the motor stops. Thus, the motor stops, and the ventilation operation of the ventilation fan 12 stops.

In the gas leakage abnormality process of each of the above-described basic mode and Modification Example 1, as long as the maintenance man does not operate the stop button 14a of the operation unit 14, the controller 10 turns on the switch to execute the ventilation operation of the ventilation fan 12, and only when the maintenance man operates the stop button 14a, the controller 10 turns off the switch to stop the ventilation operation of the ventilation fan 12.

Instead of the on-off control of the ventilation operation of the ventilation fan 12 based on the on-off control of the switch, the on-off control of the ventilation operation of the ventilation fan 12 may be executed by the control of the rotating speed of the motor of the ventilation fan 12 by the controller 10. Specifically, the ventilation operation is executed by rotating the motor at a predetermined speed by the control of the controller 10, and the ventilation operation is stopped by reducing the rotating speed of the motor to zero to stop the motor by the control of the controller 10. In accordance with this configuration, as with the above, in the gas leakage abnormality process of each of the above-described basic mode and Modification Example 1, as long as the maintenance man does not operate the stop button 14a of the operation unit 14, the controller 10 causes the motor to rotate at the predetermined speed to execute the ventilation operation of the ventilation fan 12. Moreover, only when the maintenance man operates the stop button 14a, the controller 10 reduces the rotating speed of the motor to zero, that is, stops the motor to stop the ventilation operation of the ventilation fan 12.

In Embodiment 2, the operation unit of the fuel cell system is operated by both the user and the maintenance man. However, an operation unit for the user and an operation unit for the maintenance man may be separately provided. In this case, the operation unit 14 including the operation button 14a is used as the operation unit for the maintenance man.

Next, the operations of the fuel cell system of Embodiment 2 configured as above will be explained.

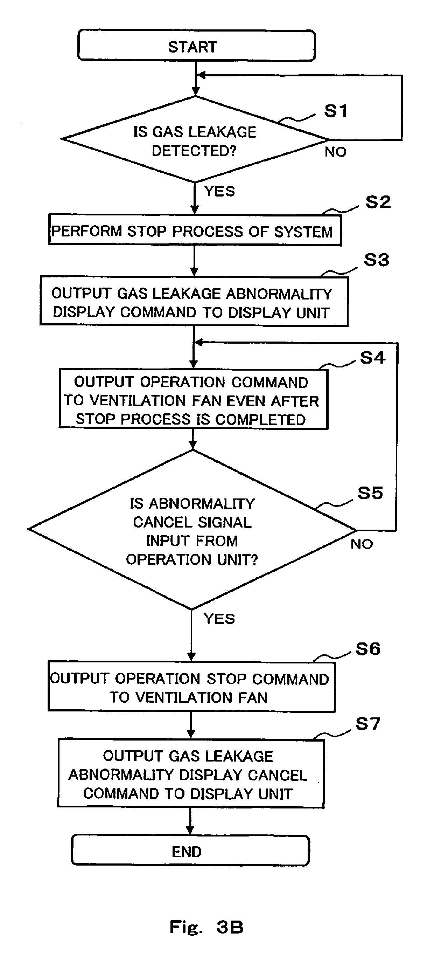

Fig. 3B is a flow chart showing steps of the gas leakage abnormality process of the fuel cell system according to Embodiment 2 of the present invention.

As shown in Fig. 3B, Steps S 1 to S4 of the gas leakage abnormality process of the fuel cell system of Embodiment 2 are the same as those of the gas leakage abnormality process (Fig. 2A) of the fuel cell system of Embodiment 1.

In the present embodiment, after the controller 10 outputs the operation command to the ventilation fan 12 in Step S4, it determines whether or not the abnormality cancel signal is input from the operation unit 14 (Step S5). When the abnormality cancel signal is not input, the controller 10 repeats Steps S4 and S5 and stands by until the abnormality cancel signal is input. During this time, when the maintenance man arrives at the installation location of the fuel cell system, and the maintenance man operates the stop button 14a as the stop unit, the abnormality cancel signal is input from the operation unit 14 to the controller 10 (Yes in Step S5), and the controller 10 stops the ventilation operation of the ventilation fan 12 (Step S6). Moreover, the controller 10 outputs a gas leakage abnormality display cancel command to the display unit 15 (Step S7). With this, the gas leakage abnormality display on the display unit 15 disappears.

In response to the input of the abnormality cancel signal from the operation unit 14, the controller 10 changes the state of the fuel cell system from the state (abnormality stop state) where the start-up is not allowed to the state (stand-by state) where the start-up of the fuel cell system is allowed. With this, when the operation start command is input by the maintenance man or the user via the operation unit 14, the controller 10 can output the operation start command to start the start-up process of the fuel cell system.

Thus, the controller 10 completes the gas leakage abnormality process. In the foregoing, the completion of the stop operation other than the stop operation of the ventilation operation of the ventilation fan 12 is regarded as the completion of the stop process. However, the stop of the ventilation fan 12 by the input of the abnormality cancel signal from the operation unit 14 may be regarded as the completion of the stop process.

### Modification Example

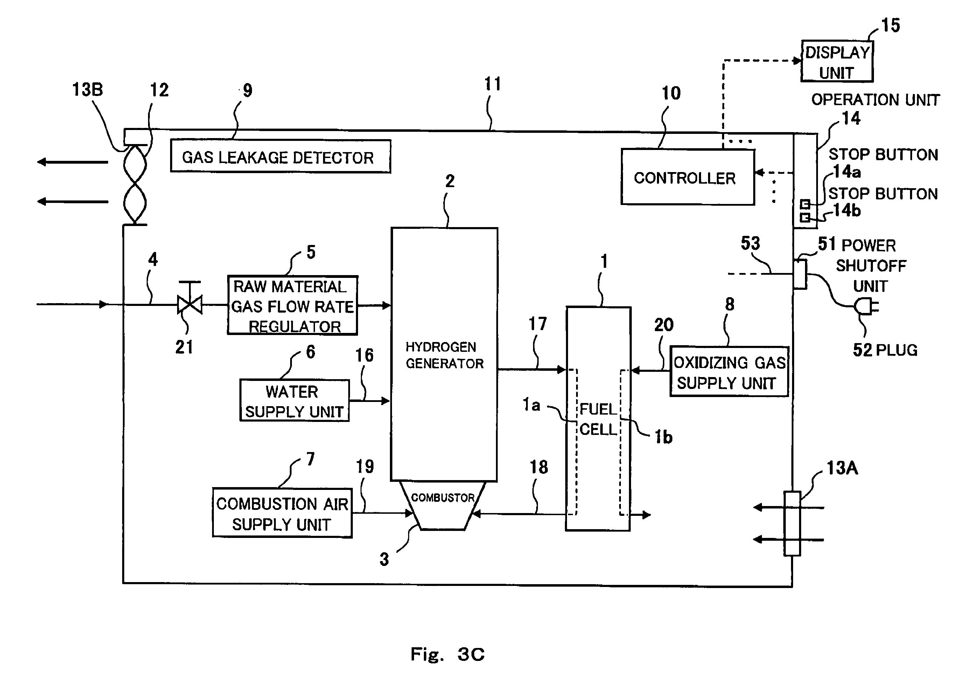

Fig. 3C is a block diagram showing the configuration of the fuel cell system of Modification Example of Embodiment 2.

The above-described fuel cell system is configured such that the abnormality cancel signal from the operation unit 14 contains both the ventilation operation stop command and the abnormality cancel command for cancelling the abnormality stop state of the fuel cell system. However, in the present modification example, as shown in Fig. 3C, the operation unit 14 is additionally provided with a stop button 14b for inputting a ventilation operation command. When the stop button 14b is pressed by the operator, the ventilation operation of the ventilation fan 12 stops. When the stop button 14a is pressed by the operator, the gas leakage abnormality on the display unit disappears, and the state of the fuel cell system is changed from the abnormality stop state to the stand-by state. The same effects as above can be obtained by this configuration.

The present embodiment explained above can obtain the same effects as Embodiment 1. Moreover, in the present embodiment (except for Modification Example), when the repair is completed, and the abnormality cancel command is input to recover the fuel cell system, the ventilation fan 12 stops, and the gas leakage abnormality display on the display unit 15 disappears, so that the recovery operation is simplified.

Here, Modification Example 1 of Embodiment 1 may be configured (modified) so as to be similar to the fuel cell system of the present embodiment.

### Embodiment 3

The fuel cell system of Embodiment 3 of the present invention is different from the fuel cell system of Embodiment 2 in that: the gas leakage abnormality process performed in the case of the first gas leakage that is the leakage of the raw material gas at a portion located upstream of the shutoff valve 21 and the gas leakage abnormality process performed in the case of the second gas leakage that is the leakage of the combustible gas at a portion located downstream of the shutoff valve 21 are different from each other; and an antifreezing operation is performed. Other than these, the fuel cell system of Embodiment 3 is the same as the fuel cell system of Embodiment 2.

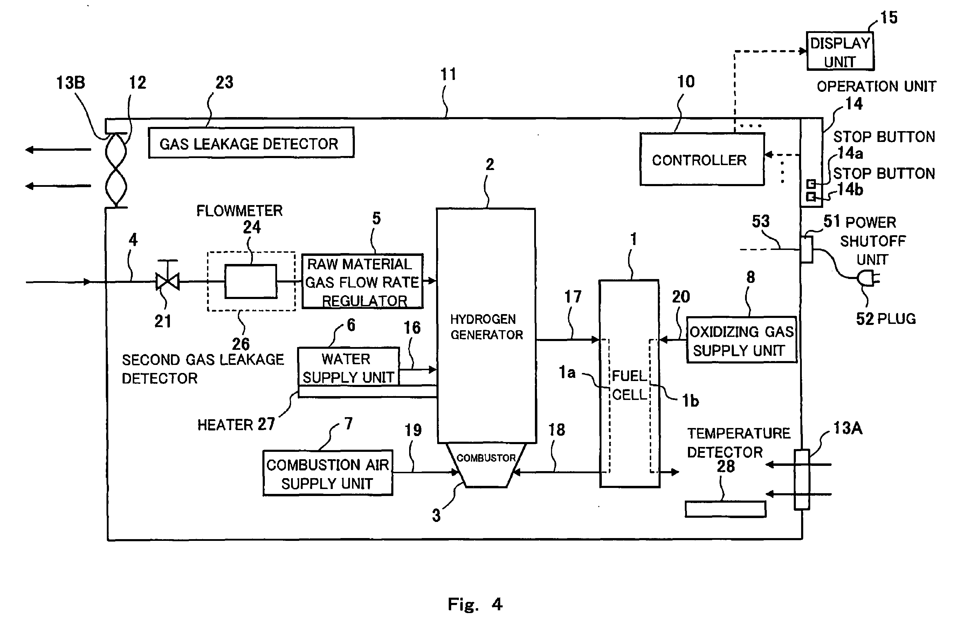

Fig. 4 is a block diagram showing the configuration of the fuel cell system according to Embodiment 3 of the present invention. Hereinafter, differences between Embodiments 3 and 2 will be explained in detail.

### Configuration for Detecting Second Gas Leakage

In Fig. 4, in the present embodiment the gas leakage detector is constituted by a first gas leakage detector 23 and a second gas leakage detector 26. The first gas leakage detector 23 is completely the same as the gas leakage detector 9 of Embodiment 1. In the present embodiment, the first gas leakage detector 23 mainly detects the first gas leakage. Therefore, the first gas leakage detector 23 is provided above the shutoff valve 21 and in the vicinity of the shutoff valve 21 to make it easy to detect the concentration of the leaked gas in a case where the gas leaks from the shutoff valve 21 or a portion of the raw material gas supply passage 4, the portion being located upstream of the shutoff valve 21.

The second gas leakage detector 26 detects the second gas leakage. In the present embodiment, the second gas leakage detector 26 is constituted by a flowmeter 24 which is disposed on the raw material gas supply passage 4 so as to be located between the shutoff valve 21 and the raw material gas flow rate regulator 5. The flowmeter 24 detects the flow rate of the raw material gas flowing through the raw material gas supply passage 4 and outputs it to the controller 10. Used as the flowmeter 24 is, for example, a mass flowmeter. Here, a principle of detecting the second gas leakage using the flowmeter 24 will be explained.

During the electric power generation, the controller 10 controls the raw material gas flow rate regulator 5 in accordance with a target electric power generation amount to regulate the flow rate of the raw material gas to be supplied to the hydrogen generator 2. This regulation is performed in such a manner that the controller 10 causes the flowmeter 24 to detect the actual flow rate of the raw material gas and controls the output (operation amount) of the raw material gas flow rate regulator 5 based on the detected flow rate of the raw material gas. In contrast, during the normal state (state where the gas leakage is not occurring), the flow rate of the raw material gas flowing through the raw material gas supply passage 4, that is, the flow rate of the raw material gas detected by the flowmeter 24 is practically uniquely determined based on the output (operation amount) of the raw material gas flow rate regulator 5. In the present embodiment, the controller 10 associates the raw material gas flow rate detected by the flowmeter 24 with the output (operation amount) of the raw material gas flow rate regulator 5 during the normal state to store such data as a reference raw material gas flow rate. In a case where the deviation of the raw material gas flow rate detected by the flowmeter 24 with respect to the reference raw material gas flow rate corresponding to the current output (operation amount) of the raw material gas flow rate regulator 5 is a predetermined flow rate threshold or more, it is determined that the gas leakage (hereinafter referred to as the "second gas leakage") from a portion of the channel of the raw material gas and the gas derived from the raw material gas is occurring, the portion being located downstream of the flowmeter 24. Here, the predetermined flow rate threshold is, for example, 1.0 L/min. The predetermined flow rate threshold can be suitably set depending on the configuration of the fuel cell system, the detection accuracy of the second gas leakage, and the like. Thus, the second gas leakage is detected by using the flowmeter 24.

In the present embodiment, gas leakage detection conditions of the second gas leakage detector 26 and the first gas leakage detector 23 are set such that the detection of the second gas leakage by the second gas leakage detector 26 is performed before the detection of the first gas leakage by the first gas leakage detector 23. The gas leakage detection conditions are suitably determined based on experiments, simulations, and the like. Therefore, the first gas leakage, that is, the gas leakage from the shutoff valve 21 or the portion located upstream of the shutoff valve 21 is detected by the first gas leakage detector 23, and the second gas leakage, that is, the gas leakage from the portion downstream of the shutoff valve 21 is detected by the second gas leakage detector 26.

Further, in the present embodiment, the controller 10 is configured to cause the display unit 15 to perform the first gas leakage abnormality display when the first gas leakage is detected and to perform the second gas leakage abnormality display when the second gas leakage is detected.

The operation unit 14 includes the stop button 14a for inputting a first gas leakage abnormality cancel command and a second gas leakage abnormality cancel command. When the first gas leakage abnormality cancel command is input by operating the stop button 14a, a first gas leakage abnormality cancel signal is output to the controller 10, and when the second gas leakage abnormality cancel command is input by operating the stop button 14a, a second gas leakage abnormality cancel signal is output to the controller 10. When the controller 10 receives these signals, it performs an abnormality cancel process to recover the fuel cell system.

### Configuration regarding Antifreezing Operation

The fuel cell system of the present embodiment includes a heater 27 and a temperature detector 28. The heater 27 heats the water supply unit 6 and the water supply passage 16, each of which is one example of a water path through which water related to the operation of the fuel cell system flows. The temperature detector 28 detects the temperature of the atmosphere in the casing 11. The heater 27 is constituted by, for example, an electric heater. The operation of the heater 28 is controlled by the controller 10. Used as the temperature detector 28 is, for example, a temperature sensor, such as a thermocouple or a thermistor. The temperature detected by the temperature detector 28 is output to the controller 10. In a case where the temperature detected by the temperature detector 28 is equal to or lower than a predetermined temperature threshold that is equal to or higher than a freezing point, the controller 10 activates the heater 27 as the antifreezing operation. This prevents the water in the water supply unit 6 and the water supply passage 16 from freezing. In the present embodiment, the heater 27 is provided to heat the water supply unit 6 and the water supply passage 16. However, the heater 27 may be provided to further heat the other water paths in the fuel cell system, such as a cooling water path (not shown) through which cooling water for cooling the fuel cell 1 flows and a heat recovery water path (not shown) for recovering as hot water the heat of the cooling water having cooled the fuel cell 1. In summary, the heater 27 may be provided to heat portions such that the water paths in the fuel cell system can be prevented from freezing.

Next, the gas leakage abnormality process and the antifreezing operation as characteristic operations of the fuel cell system configured as above will be explained.

### Gas Leakage Abnormality Process

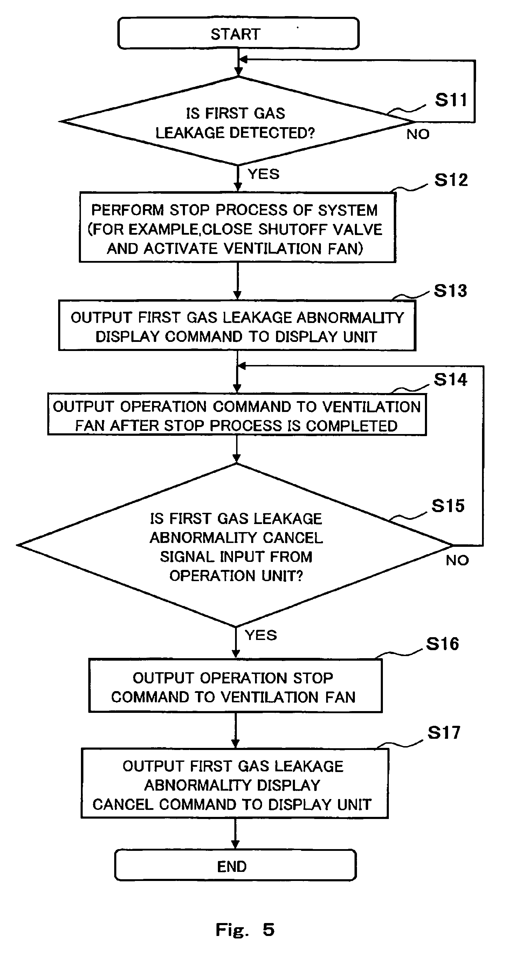

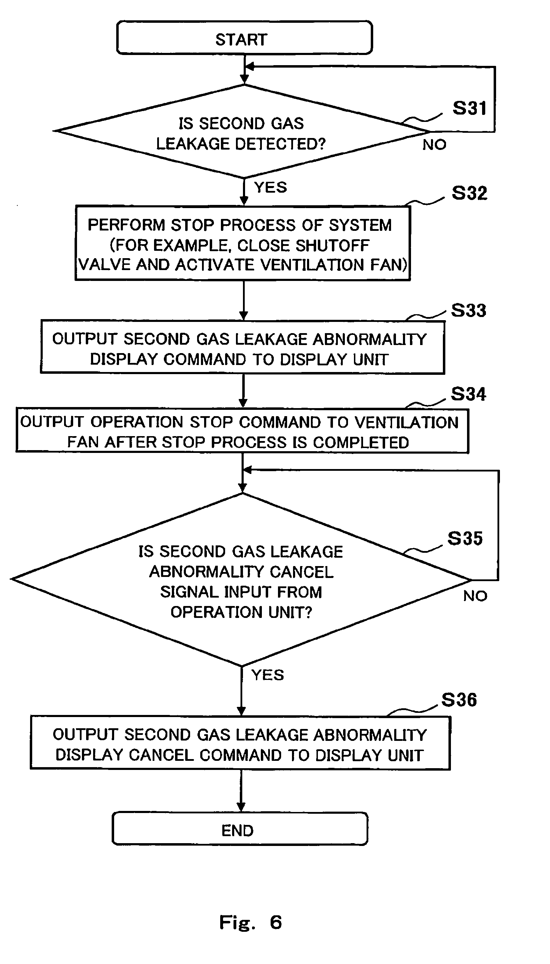

Fig. 5 is a flow chart showing steps of a first gas leakage abnormality process. Fig. 6 is a flow chart showing steps of a second gas leakage abnormality process.

In the present embodiment, the controller 10 concurrently performs the first gas leakage abnormality process for the first gas leakage and the second gas leakage abnormality process for the second gas leakage. The first gas leakage abnormality process and the second gas leakage abnormality process are executed during the operation of the fuel cell system, that is, during any one of the start-up process, the electric power generation, and the stop process.

First, the first gas leakage abnormality process will be explained.

In Fig. 5, first, the controller 10 determines whether or not the first gas leakage is detected (Step S11). Specifically, when the output voltage of the first gas leakage detector 23 is a predetermined threshold or higher, the controller 10 determines that the first gas leakage (gas leakage from a portion (including the shutoff valve 21) of the raw material gas supply passage, the portion being located upstream of the shutoff valve 21) is detected. In contrast, when the output voltage of the detector 23 is lower than the predetermined threshold, the controller 10 determines that the first gas leakage is not detected.

When the first gas leakage is not detected (No in Step S11), the controller 10 returns to Step S 11 to execute the above first gas leakage determining process.

In contrast, when the first gas leakage is detected, the controller 10 starts the stop process of the fuel cell system as the first gas leakage abnormality process (Step S12).

Next, the controller 10 outputs a first gas leakage abnormality display command to the display unit 15 (Step S13). With this, the display unit 15 performs display indicating that the first gas leakage abnormality has occurred. Thus, the user is informed of the occurrence of the first gas leakage abnormality, that is, the occurrence of the leakage of the combustible gas. As a result, the user who has confirmed the first gas leakage abnormality display on the display unit 15 calls the maintenance man.

Then, a predetermined operation as the stop process is executed, and the stop process of the fuel cell system is completed. In the stop process, the shutoff valve 21 is closed, and the ventilation fan 12 is activated.

Even after the stop process of the fuel cell system is completed, the controller 10 outputs the operation command to the ventilation fan 12 (Step S14). With this, the ventilation operation of the ventilation fan 12 is executed. As a result, as explained in Embodiment 1, until the first gas leakage abnormality cancel signal is input from the operation unit 14, the raw material gas continuously leaking from the raw material gas supply passage 4 located upstream of the shutoff valve 21 is diluted by the outside air, having been suctioned into the casing 11, to be discharged to the outside of the casing 11. Thus, the progress of the generation of the combustible gas mixture is suppressed. To be specific, the ventilation operation of the ventilation fan 12 is executed as long as it is not stopped by the stop unit (the operation unit 14 and the controller 10). Therefore, the safety of the fuel cell system of the present embodiment is higher than that of the conventional fuel cell system.

Then, the controller 10 determines whether or not the first gas leakage abnormality cancel signal is input from the operation unit 14 (Step S 15). During this time, the maintenance man performs the maintenance work for the first gas leakage abnormality. After the maintenance work is done, the maintenance man operates the operation unit 14 to input the first gas leakage abnormality cancel command. With this, the operation unit 14 outputs the first gas leakage abnormality cancel signal to the controller 10.

When the first gas leakage abnormality cancel signal is not input, the controller 10 stands by for the input of the first gas leakage abnormality cancel signal (when No in Step S15, Steps S 14 and S15 are repeatedly executed).

In contrast, when the first gas leakage abnormality cancel signal is input (Yes in Step S 15), the controller 10 outputs the operation stop command to the ventilation fan 12 (Step S16) and outputs a first gas leakage abnormality display cancel command to the display unit 15. With this, the ventilation fan 12 stops, and the first gas leakage abnormality display on the display unit 15 disappears. Therefore, the operation unit 14 and the controller 10 in the first gas leakage abnormality process constitute the "stop unit" configured to stop the ventilation operation of the ventilation fan 12 by the manual operation of the operator. In addition, the controller 10 changes the state of the fuel cell system from the state (abnormality stop state) where the start-up is not allowed to the state (stand-by state) where the start-up of the fuel cell system is allowed. Thus, the fuel cell system is recovered. With this, when the operation start command is input by the maintenance man or the user via the operation unit 14, the controller 10 can output the operation start command to start the start-up process of the fuel cell system.

Thus, the controller 10 completes the first gas leakage abnormality process. In the foregoing, the completion of the stop operation other than the stop operation of the ventilation operation of the ventilation fan 12 is regarded as the completion of the stop process. However, the stop of the ventilation fan 12 by the input of the first gas leakage abnormality cancel signal from the operation unit 14 may be regarded as the completion of the stop process.

The fuel cell system of the present embodiment is configured such that the first gas leakage abnormality cancel command and the second gas leakage abnormality cancel command can be input by operating the stop button 14a. However, a stop button for inputting the first gas leakage abnormality cancel command and a stop button for inputting the second gas leakage abnormality cancel command may be separately provided.

The fuel cell system of the present embodiment is configured such that the first abnormality cancel signal from the operation unit 14 contains both the ventilation operation stop command of the ventilation fan and the abnormality cancel command for cancelling the abnormality stop state of the fuel cell system. However, the fuel cell system of the present embodiment may be configured such that: the operation unit 14 is additionally provided with the stop button 14b for inputting the ventilation operation command; when the stop button 14b is pressed by the operator, the ventilation operation of the ventilation fan 12 stops; and when the stop button 14a is pressed by the operator, the gas leakage abnormality on the display unit disappears, and the state of the fuel cell system is changed from the abnormality stop state to the stand-by state.

Next, the second gas leakage abnormality process will be explained.

In Fig. 6, first, the controller 10 determines whether or not the second gas leakage is detected (Step S31). Specifically, in the present embodiment, in a case where the deviation of the raw material gas flow rate detected by the flowmeter 24 constituting the second gas leakage detector 26 with respect to the reference raw material gas flow rate is the predetermined flow rate threshold or more, the controller 10 determines that the second gas leakage is detected. In contrast, in a case where the deviation of the raw material gas flow rate detected by the flowmeter 24 with respect to the reference raw material gas flow rate is less than the predetermined flow rate threshold, the controller 10 determines that the second gas leakage is not detected.

When the second gas leakage is not detected (No in Step S31), the controller 10 returns to Step S31 to execute the first gas leakage determining process.

In contrast, when the second gas leakage is detected, the controller 10 starts the stop process of the fuel cell system as the second gas leakage abnormality process (Step S32).

Next, the controller 10 outputs a second gas leakage abnormality display command to the display unit 15 (Step S33). With this, the display unit 15 performs display indicating that the second gas leakage abnormality has occurred, that is, the gas leakage from the portion located downstream of the shutoff valve 21 has occurred. Thus, the user is informed of the occurrence of the gas leakage from the portion located downstream of the shutoff valve 21. As a result, the user who has confirmed the second gas leakage abnormality display on the display unit 15 calls the maintenance man. In the stop process, the shutoff valve 21 is closed, and the ventilation fan 12 is activated. Therefore, the leaked gas is diluted by the outside air, having been suctioned into the casing 11, to be discharged to the outside of the casing 11. Thus, the progress of the generation of the combustible gas mixture is suppressed.

After that, the ventilation operation of the ventilation fan 12 is stopped, and the stop process of the fuel cell system is completed. It is preferable that the amount of ventilation by the ventilation operation of the ventilation fan 12 be the amount of ventilation by which the combustible gas having leaked by the second gas leakage abnormality is estimated to be reduced up to less than a combustion lower limit in the casing 11. This condition regarding the amount of ventilation is suitably determined based on experiments, simulations, and the like, and the operation amount and operating time of the ventilation fan 12 in the ventilation operation are suitably set based on the determined condition regarding the amount of ventilation. Here, the second gas leakage abnormality is the gas leakage from the portion located downstream of the shutoff valve 21. Therefore, after the shutoff valve 21 is closed as the stop process, the combustible gas is unlikely to leak. Or, even if the leakage of the combustible gas continues after the shutoff valve 21 is closed, the combustible gas in the raw material gas path and the fuel gas path including the hydrogen generator 2 and the fuel cell 1 just leaks at most, and the amount of leakage of the combustible gas is limited. Therefore, in the second gas leakage abnormality process, the ventilation operation executed by the ventilation fan 12 in the stop process does not continue until the stop command is input from the operation unit 14, and the ventilation operation of the ventilation fan 12 is stopped after the stop process is completed (in other words, the ventilation operation of the ventilation fan 12 is stopped even if the ventilation operation of the ventilation fan 12 is not stopped by the "stop unit"). Thus, the electric power consumption of the ventilation fan 12 is reduced. With this, the efficiency of the fuel cell system is improved while suppressing safety deterioration as compared to a case where as in the fuel cell system of each of Embodiments 1 and 2, the operation of the ventilation fan continues regardless of whether or not the leakage of the combustible gas continues after the shutoff valve 21 is closed as the stop process when the leakage of the combustible gas has occurred.

The first gas leakage abnormality process (Step S12 and subsequent steps in Fig. 5) is prioritized over the second gas leakage abnormality process (Step S32 and subsequent steps in Fig. 6). Specifically, if the first abnormality is detected during the stop process in the second gas leakage abnormality process, the first abnormality process is prioritized, and the ventilation operation of the ventilation fan 12 continues until the stop command is input by the operation unit 14.

Next, in Step S35, the controller 10 determines whether or not the second gas leakage abnormality cancel signal is input from the operation unit 14. During this time, the maintenance man performs the maintenance work for the second gas leakage abnormality. After the maintenance work is done, the maintenance man operates the operation unit 14 to input the second gas leakage abnormality cancel command. With this, the operation unit 14 outputs the second gas leakage abnormality cancel signal to the controller 10.

When the second gas leakage abnormality cancel signal is not input, the controller 10 stands by for the input of the second gas leakage abnormality cancel signal (when No in Step S35, Step S35 is repeatedly executed).

In contrast, when the second gas leakage abnormality cancel signal is input (Yes in Step S35), the controller 10 outputs a second gas leakage abnormality display cancel command to the display unit 15. With this, the second gas leakage abnormality display on the display unit 15 disappears. In addition, the controller 10 changes the state of the fuel cell system from the state (abnormality stop state) where the start-up is not allowed to the state (stand-by state) where the start-up of the fuel cell system is allowed. With this, when the operation start command is input by the maintenance man or the user via the operation unit 14, the controller 10 can output the operation start command to start the start-up process of the fuel cell system.

Thus, the controller 10 completes the second gas leakage abnormality process.

If the first abnormality is detected during the stop process in the second gas leakage abnormality process, the display unit 15 concurrently performs the first gas leakage abnormality display and the second gas leakage abnormality display. Moreover, after both the first gas leakage abnormality cancel command and the second gas leakage abnormality cancel command are input by the maintenance man via the operation unit 14, the state of the fuel cell system is changed from the state (abnormality stop state) where the start-up is not allowed to the state (stand-by state) where the start-up is allowed.

### Antifreezing Operation

As the antifreezing operation, the controller 10 activates the heater 27 in a case where the temperature detected by the temperature detector 28 is equal to or lower than the predetermined temperature threshold that is equal to or higher than the freezing point. With this, the water in the water supply unit 6 and the water supply passage 16 is prevented from freezing.

Here, the relation between the antifreezing operation and the above-described gas leakage abnormality process will be especially explained. As described above, in the present embodiment, to prevent the water path in the casing 11 from freezing under the low-temperature environment, the water path is heated by the heater 27. However, in a case where the ventilation fan 12 is operating, the outside cool air is suctioned through the intake port 13A into the casing 11 to ventilate the casing 11. Therefore, the temperature of the atmosphere in the casing 11 further decreases. As a result, the power consumption of the heater 27 necessary to prevent the freezing increases. To be specific, if the ventilation operation of the ventilation fan 12 is executed during the antifreezing operation, the efficiency of the fuel cell system deteriorates. However, in the fuel cell system of the present embodiment, if the leakage of the combustible gas is detected, and this leakage is the gas leakage from the combustible gas path located downstream of the shutoff valve 21, the operation of continuing the ventilation operation of the ventilation fan 12 until the stop command is input from the operation unit 14 is not performed, and the ventilation fan 12 is stopped after the stop process is completed. Therefore, the ventilation operation of the ventilation fan 12 is not executed during the antifreezing operation, and this can reduce the power consumption of the heater 27. To be specific, in accordance with the fuel cell system of the present embodiment, the power consumption necessary for the antifreezing operation can be reduced and the efficiency of the fuel cell system can be improved as compared to the fuel cell system of each of Embodiments 1 and 2 in which the operation of the ventilation fan continues regardless of whether or not the leakage of the combustible gas continues after the shutoff valve is closed.

Next, Modification Example of the second gas leakage detector 26 of the present embodiment will be explained.

### Modification Example 1

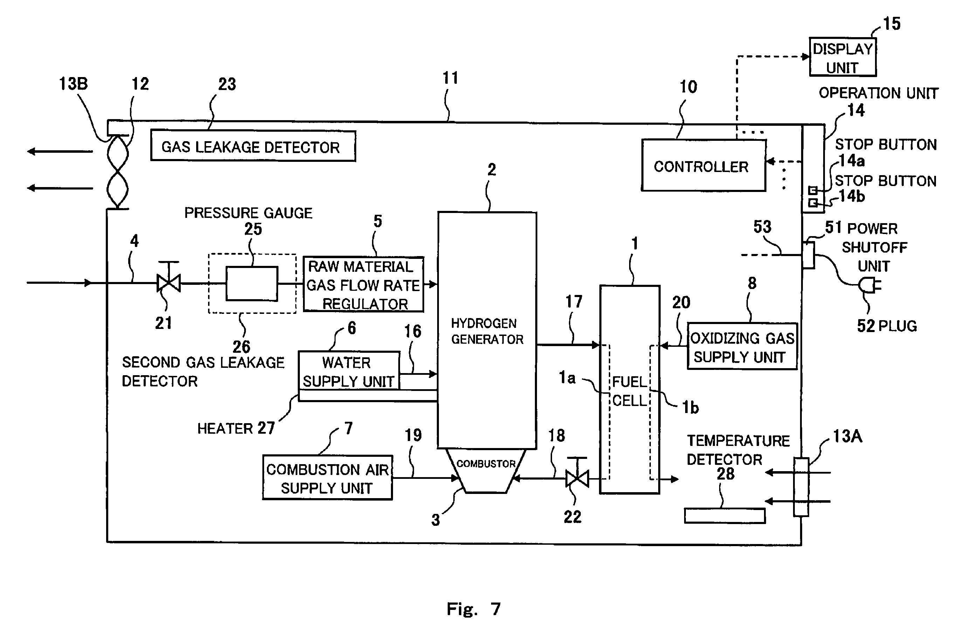

Fig. 7 is a block diagram showing Modification Example of the second gas leakage detector 26 in the present embodiment.

As shown in Fig. 7, in Modification Example 1, the second gas leakage detector 26 is constituted by a pressure gauge 25. The pressure gauge 25 detects the pressure of the raw material gas in the raw material gas supply passage 4 and outputs it to the controller 10. Used as the pressure gauge 25 is, for example, a pressure sensor using a pressure sensitive element, such as a strain resistor.

In the present modification example, an off gas shutoff valve 22 is disposed on the off gas supply passage 18. The off gas shutoff valve 22 opens and closes to allow and block the flow of the gas in the off gas supply passage 18. The operation of the off gas shutoff valve 22 is controlled by the controller 10.

Next, a principle of detecting the second gas leakage using the pressure gauge 25 and the off gas shutoff valve 22 will be explained.

First, the controller 10 opens the shutoff valve 21 on the raw material gas supply passage 4 and closes the off gas shutoff valve 22 on the off gas supply passage 18. Then, the supply pressure of the raw material gas supplied from the raw material gas supply source (the supply pressure is normally positive pressure with respect to the atmospheric pressure and is about +2 kPa when the raw material gas is, for example, the city gas 13A) is applied to a portion of a path (hereinafter referred to as a "combustible gas path") of the raw material gas and the gas derived from the raw material gas, the portion extending from the raw material gas supply passage 4 to the off gas shutoff valve 22 and including the hydrogen generator 2 and the fuel cell 1. Next, the controller 10 closes the shutoff valve 21. If the gas leakage from the combustible gas path between the shutoff valve 21 and the off gas shutoff valve 22 is not occurring, the pressure gauge 25 should detect the same pressure as the supply pressure of the raw material gas. In contrast, if the gas leakage from the combustible gas path between the shutoff valve 21 and the off gas shutoff valve 22 is occurring, the pressure gauge 25 should detect the pressure lower than the supply pressure of the raw material gas. Here, in the present modification example, a predetermined pressure threshold corresponding to the supply pressure (to be precise, pressure obtained by adding a pressure detection error to the supply pressure ) of the raw material gas is set in the controller 10. When the pressure detected by the pressure gauge 25 is lower than the predetermined pressure threshold, the controller 10 determines that the gas leakage from the portion, located downstream of the shutoff valve 21, of the combustible gas path is occurring, that is, the second gas leakage is occurring. When the pressure detected by the pressure gauge 25 is the predetermined pressure threshold or higher, the controller 10 determines that the gas leakage from the portion, located downstream of the shutoff valve 21, of the combustible gas path is not occurring, that is, the second gas leakage is not occurring. Thus, the second gas leakage is detected by using the pressure gauge 25 and the off gas shutoff valve 22.

Herein, 1 kPa is set as the above-described predetermined pressure threshold. However, the predetermined pressure threshold does not have to be 1kPa and may be set depending on the configuration of the fuel system and the detection accuracy of the gas leakage.

In the case of using the second gas leakage detector 26, the off gas shutoff valve 22 and the shutoff valve 21 need to be closed. Therefore, the gas leakage cannot be continuously detected during the operation of the fuel cell system. Here, in the present modification example, the gas leakage detection is performed not in the electric power generating operation of the fuel cell system but in at least one of the start-up process and the stop process.

The off gas shutoff valve 22 disposed on the off gas supply passage 18 is utilized to detect the second gas leakage. However, the present modification example is not limited to this. Any on-off valve may be utilized as long as it is disposed on the combustible gas path located downstream of the pressure gauge 25.

In the fuel cell system of the present embodiment, the flowmeter 24 or the pressure gauge 25 is used as the second gas leakage detector 26. However, the present embodiment is not limited to these. Any detector may be used as long as it can detect the gas leakage from the combustible gas path located downstream of the shutoff valve 21 to the inside of the casing 11. For example, a voltage detector (not shown) configured to detect the voltage generated by the fuel cell 1, a combustion failure detector (not shown) configured to detect the failure of the combustion in the combustor 3, a CO detector (not shown) configured to detect carbon monoxide contained in the flue gas of the combustor 3, or a reforming temperature detector (not shown) configured to detect the temperature of the reformer (not shown) may be used as the second gas leakage detector 26.

If the voltage detected by the voltage detector is lower than a voltage threshold although the raw material gas is normally supplied, there is a possibility that the fuel gas is leaking from the hydrogen generator 2 or the fuel gas passage 17, and the flow rate of the fuel gas supplied to the fuel cell 1 is abnormally decreasing. If the combustion failure detector detects the combustion failure of the combustor 3, there is a possibility that the gas is leaking from the combustible gas path extending from the raw material gas supply passage 4 to the combustor 3, and the flow rate of the combustible gas supplied to the combustor 3 is decreasing. If the CO concentration detected by the CO detector is a concentration threshold or higher, there is a possibility that the gas is leaking from the combustible gas path extending from the raw material gas supply passage 4 to the combustor 3, and the flow rate of the combustible gas supplied to the combustor 3 is decreasing. If the temperature detected by the reforming temperature detector is a predetermined lower limit temperature or lower during the electric power generating operation of the fuel cell system, there is a possibility that the gas is leaking from the combustible gas path extending from the raw material gas supply passage 4 to the combustor 3, and the flow rate of the combustible gas supplied to the combustor 3 is decreasing. If the temperature detected by the reforming temperature detector does not reach a predetermined temperature necessary for the reforming reaction during the start-up process of the fuel cell system although a predetermined time by which the temperature detected by the reforming temperature detector should reach the predetermined temperature has elapsed, there is a possibility that the gas is leaking from the combustible gas path extending from the raw material gas supply passage 4 to the combustor 3, and the flow rate of the combustible gas supplied to the combustor 3 is decreasing.

Here, by providing the combustion failure detector (not shown), the CO detector (not shown) configured to detect the carbon monoxide contained in the flue gas of the combustor 3, or the reforming temperature detector (not shown) configured to detect the temperature of the reformer (not shown), and suitably setting thresholds for respective values detected by these detectors, these detectors can be used to detect of the second gas leakage.

In the present embodiment, the gas leakage abnormality process may be executed during the stop state of the fuel cell system as with Modification Example 1 of Embodiment 1.

### Embodiment 4

Each of Embodiments 1 to 3 (including Modification Examples) has explained a mode in which the fuel cell system includes the hydrogen generator 2. However, in the present invention, the fuel cell system does not have to include the hydrogen generator 2. Embodiment 4 of the present invention will explain a mode in which instead of the hydrogen generator 2, a fuel gas source supplies the fuel gas in the fuel cell system.

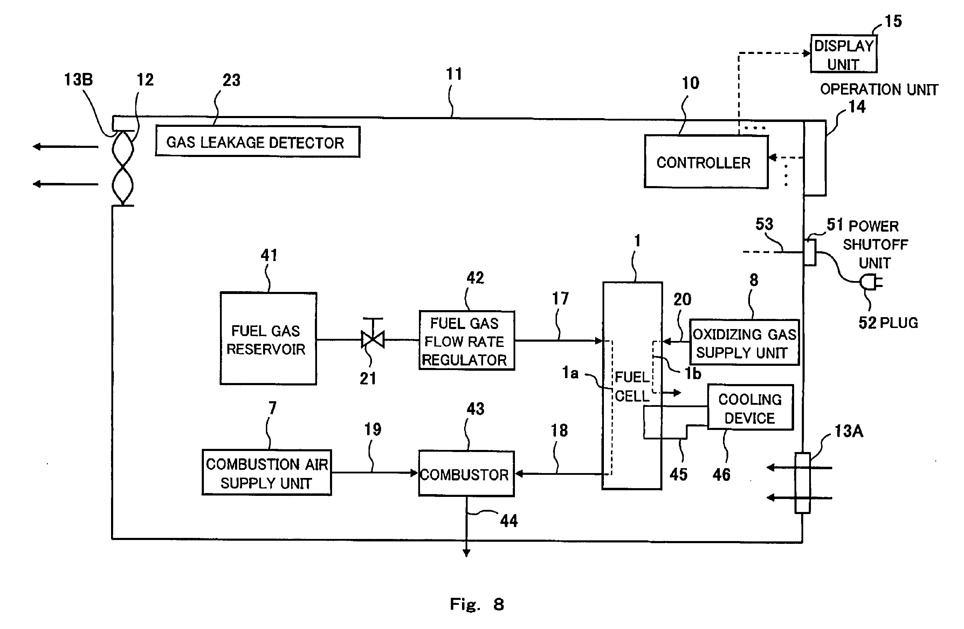

Fig. 8 is a block diagram showing the configuration of the fuel cell system according to Embodiment 4 of the present invention.

As shown in Fig. 8, the fuel cell system of the present embodiment is different from the fuel cell system of Embodiment 1 mainly in that the fuel cell generates electric power using the hydrogen-containing fuel gas supplied from the fuel gas source, instead of the hydrogen generator 2 as described above. Hereinafter, this difference will be mainly explained.

In the present embodiment, a fuel gas reservoir 41 as the fuel gas supply source is provided in the casing 11. The fuel gas reservoir 41 is configured such that: a closed container is filled with the fuel gas having the positive pressure with respect to the atmospheric pressure; and by opening the opening of the closed container, the fuel gas having the positive supply pressure with respect to the atmospheric pressure flows out from the closed container to the outside. Examples of the fuel gas reservoir 41 are a hydrogen bomb and a tank incorporating a hydrogen absorbing alloy. The fuel gas stored in the fuel gas reservoir 41 is supplied through the fuel gas supply passage 17 to the fuel gas channel 1a of the fuel cell 1. The shutoff valve 21 and a fuel gas flow rate regulator 42 are disposed on the fuel gas supply passage 21 in this order from the upstream side. The shutoff valve 21 opens and closes to allow and block the flow of the fuel gas in the fuel gas supply passage 17. The shutoff valve 21 is constituted by, for example, an on-off valve. The fuel gas flow rate regulator 42 regulates the flow rate of the fuel gas in the fuel gas supply passage 17. In the present embodiment, the fuel gas flow rate regulator 42 is constituted by a flow rate control valve configured to reduce the pressure of the fuel gas from the fuel gas supply source having the supply pressure to regulate the flow rate of the fuel gas.

In Embodiment 1, the shutoff valve 21 and the raw material gas regulator 5 are provided upstream of the hydrogen generator 2 that is the fuel gas source. In contrast, in the present embodiment, the shutoff valve 21 and the fuel gas flow rate regulator 42 are provided downstream of the fuel gas reservoir 41 that is the fuel gas supply source. However, the shutoff valve 21 of the present embodiment functions in the same way as the shutoff valve 21 of Embodiment 1 in that the shutoff valve 21 of the present embodiment allows and blocks the flow of the combustible gas flowing through the fuel cell 1. In addition, the fuel gas flow rate regulator 42 of the present embodiment functions in the same way as the raw material gas flow rate regulator 5 of Embodiment 1 in that the fuel gas flow rate regulator 42 regulates the flow rate of the combustible gas flowing through the fuel cell 1. Therefore, repetitions of the same explanations are avoided. The present embodiment is configured such that one shutoff valve 21 is disposed on the fuel gas supply passage 17 in the casing 11. However, in a case where a plurality of shutoff valves are disposed on the fuel gas supply passage 17 in the casing 11, the shutoff valve 21 is defined as an extreme upstream shutoff valve among the shutoff valves configured to close at the time of the stop of the electric power generating operation of the fuel cell system.

In the present embodiment, instead of the combustor 3 attached to the hydrogen generator 2 in Embodiment 1 (Fig. 1), an independent combustor 43 is provided in the casing 11. The off gas discharged through the fuel gas channel 1a of the fuel cell 1 is supplied through the off gas supply passage 18 to the combustor 43, and the combustion air is supplied from the combustion air supply unit 7 through the combustion air supply passage 19 to the combustor 43. Then, the combustor 43 combusts the off gas using the combustion air. The flue gas generated by this combustion is discharged through a flue gas passage 44 to the outside of the casing 11.

A cooling system configured to cool the fuel cell 1 is provided in the casing 11. The cooling system includes a cooling device 46 and a cooling water path 45 formed to extend through the fuel cell 1. The cooling device 46 is configured to cause cooling water to flow through the cooling water path 45 and release heat from the cooling water, having cooled the fuel cell 1 to be increased in temperature, to cool the cooling water. The fuel cell 1 is cooled by this configuration. In the fuel cell system of the present embodiment, the fuel gas reservoir 41 as the combustion gas supply source is provided in the casing 11. However, the fuel gas reservoir 41 may be provided outside the casing 11. In this case, the shutoff valve 21 is provided in the casing 11.

The hardware configuration other than the above is the same as that of the fuel cell system of Embodiment 1. Therefore, the control sequence of the fuel cell system herein is designed in the same manner as that of Embodiment 1. Therefore, a repetition of the same explanation is avoided.

In the fuel cell system of the present embodiment configured as above, the "combustible gas path" is constituted by the fuel gas passage 17, the fuel gas channel 1a of the fuel cell 1, and the off gas supply passage 18. The above fuel gas source is one example of the combustible gas source configured to supply the combustible gas flowing through the "combustible gas path" and have the positive supply pressure.

In the fuel cell system of the present embodiment configured as above, during the operation, the shutoff valve 1 opens to supply the fuel gas from the fuel gas reservoir 41 to the fuel cell 1, the fuel cell 1 generates the electric power, and the off gas is combusted in the combustor 43 to be discharged to the outside of the casing 11. Then, if the gas leakage detector 9 detects the leakage of the combustible gas during the operation, the same gas leakage abnormality process as in Embodiment 1 is performed. Thus, the same effects as in Embodiment 1 can be obtained.

The fuel cell system of the present embodiment may be applied to the fuel cell system of each of Embodiments 2 and 3 (including Modification Examples). In a case where the fuel cell system of the present embodiment is applied to the fuel cell system of Embodiment 3, the heater 27 of Fig. 7 may be provided to heat, for example, the cooling water path 45.

### Other Modification Examples

### Modification Example of Embodiments 2 to 4 (Including Modification Examples)

In the fuel cell system of each of Embodiments 2 to 4 (including Modification Examples), adopted as a mode of the "stop unit" is a mode in which: the command for stopping the ventilation operation of the ventilation fan is input to the controller by the manual operation of the operator; and the controller stops the ventilation operation of the ventilation fan based on the command. The fuel cell system of the present modification example is characterized in that in the fuel cell system of each of Embodiments 2 to 4 (including Modification Examples), instead of using the above "stop unit", the supply of the electric power to the ventilation fan is physically cut by the manual operation of the operator as with Embodiment 1. The gas leakage abnormality process of the present modification example is executed in the same manner as in the fuel cell system of each of Embodiments 2 to 4 (including Modification Examples).

### Modification Example 1 of Embodiments 1 to 4 (Including Modification Examples)

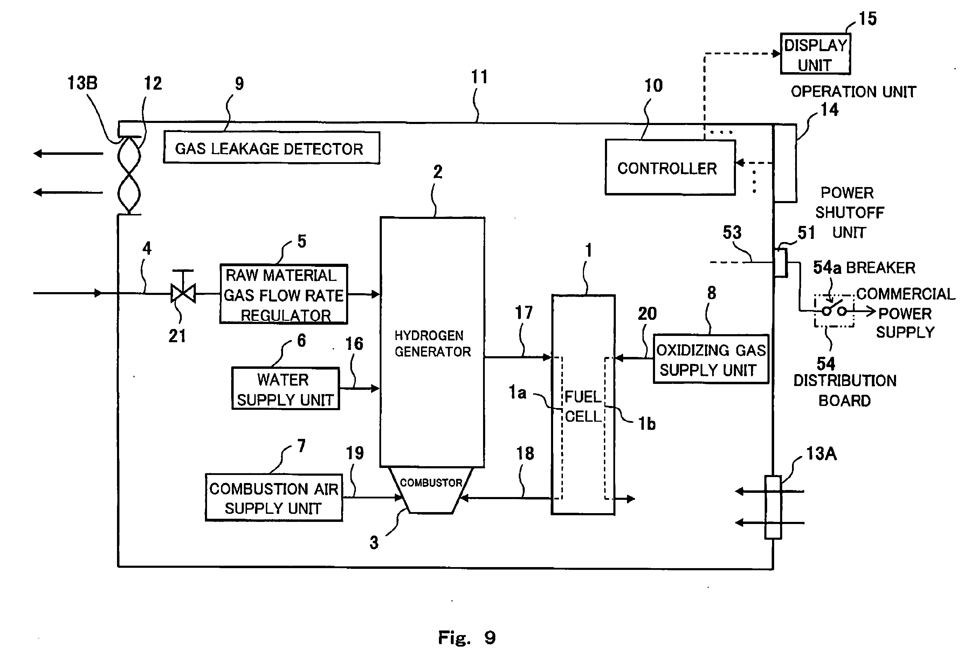

In each of Embodiments 1 to 4 (including Modification Examples), the plug 52 is provided at the upstream end of the electric power supply path 53. However, in the present modification example, the upstream end of the electric power supply path 53 is the power shutoff unit 51. As shown in Fig. 9, the power shutoff unit 51 is connected via an electric wire to a distribution board 54 connected to the commercial power supply. The distribution board 54 is provided with a breaker 54a which is operated to cut and establish the connection between the electric power supply path 53 and the commercial power supply. By operating the breaker 54a, the supply of the operation electric power to the ventilation fan 12 can be stopped to stop the ventilation operation of the ventilation fan 12. The distribution board 54 and the breaker 54a are not the components of the fuel cell system of the present modification example. However, this step of operating the breaker 54a to stop the ventilation operation of the ventilation fan 12 corresponds to the step of "stopping the ventilation operation of the ventilation fan by the manual operation of the operator" in the method for operating the fuel cell system of the present invention. As above, the fuel cell system of each of the embodiments of the present invention may be configured such that the ventilation operation of the ventilation fan 12 is stopped by operating the component (such as the breaker 54a), which is not the component of the fuel cell system, by the operator. In the present modification example, the power shutoff unit 51 may be omitted.

### Modification Example 2 of Embodiments 1 to 4 (including Modification Examples)

In each of Embodiments 1 to 4 (including Modification Examples), the extreme upstream shutoff valve which is closed by the controller 10 when the fuel cell stops generating the electric power is provided in the casing 11. However, the fuel cell system of the present modification example is characterized in that the shutoff valve which is closed by the control of the controller 10 when the fuel cell stops generating the electric power is provided outside the casing 11. The gas leakage abnormality stop process of the present modification example is executed in the same manner as in each of Embodiments 1 to 4 (including Modification Examples).

This is because: in a case where the leakage of the combustible gas occurs, the shutoff valve provided outside the casing 11 may not be closed even by performing the close control; in such a case, the gas leakage from the combustible gas path in the casing 11 may continue; and therefore, the gas leakage abnormality process of the fuel cell system of each of Embodiments 1 to 4 (including Modification Examples) is executed to obtain the same effects as above.

### Modification Example of Above Embodiments and Modification Examples

The fuel cell system of the present modification example is characterized in that in the fuel cell system of each of Embodiments and Modification Examples above, in the stop (second stop) different from the abnormality stop (first stop) due to the abnormality of the leakage of the combustible gas, the controller stops the ventilation operation of the ventilation fan 12 even if the ventilation operation of the ventilation fan 12 is not stopped by the "stop unit".

With this configuration, in the second stop, the electric power consumption by the ventilation operation of the ventilation fan is suppressed. Therefore, as compared to a case where the operation of the ventilation fan continues, the efficiency of the fuel cell system improves while suppressing the safety deterioration.

Here, at least the following two modes will be explained as specific examples of the above characteristic. A first mode is characterized in that in the second stop, the ventilation operation of the ventilation fan 12 is executed during the stop process, and the ventilation operation is stopped before the stop process completes. In the first mode, during the electric power generating operation, the ventilation operation of the ventilation fan may or may not be executed. A second mode is characterized in that the ventilation operation is executed during the electric power generating operation, and the ventilation operation of the ventilation fan 12 is not executed in the stop process in the second stop.

The "second stop" is at least one of the "normal stop" and "abnormality stop due to the abnormality different from the abnormality of the leakage of the combustible gas".

Here, the above "normal stop" is defined as a stop different from the abnormality stop executed due to the abnormality of the fuel cell system, such as the leakage of the combustible gas. Specific examples of the normal stop are the stop of the electric power generating operation of the fuel cell system by the electric power generation stop command input by the operator via the operation unit and the stop executed when a preset stop schedule time of the electric power generating operation of the fuel cell system comes.

Moreover, specific examples of the "abnormality stop due to the abnormality different from the abnormality of the leakage of the combustible gas" are the stop due to the abnormality of the output voltage (excessive voltage increase or excessive voltage decrease) of the fuel cell system and the stop due to the abnormality of the temperature of a heat medium which recovers exhaust heat of the fuel cell system.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The safety of the fuel cell system of the present invention when the leakage of the combustible gas has occurred is higher than that of the conventional fuel cell system. Therefore, the fuel cell system of the present invention is useful as a fuel cell system used at home or in an automobile.

### Reference Signs List

- 1, 31: fuel cell
- 2, 32: hydrogen generator
- 3: combustor
- 4, 38: raw material gas supply passage
- 5: raw material gas flow rate regulator
- 6: water supply unit
- 7: combustion air supply unit
- 8: oxidizing gas supply unit
- 9: gas leakage detector
- 10: controller
- 11, 34: casing
- 12: ventilation fan
- 13A: intake port
- 13B: exhaust port
- 14: operation unit
- 14a: stop button
- 14b: stop button
- 15: display unit
- 16: water supply passage
- 17: fuel gas supply passage
- 18: off gas supply passage
- 19: combustion air supply passage
- 20: oxidizing gas supply passage
- 21, 39: shutoff valve
- 22: off gas shutoff valve
- 23: first gas leakage detector
- 24: flowmeter
- 25: pressure gauge
- 26: second gas leakage detector
- 27: heater
- 28: temperature detector
- 29: ventilation fan abnormality detector
- 30: power supply circuit
- 33: DC/AC converter
- 35: fan
- 36: exhaust port
- 37: gas leakage detector
- 41: fuel gas reservoir
- 42: fuel gas flow rate regulator
- 43: combustor
- 44: flue gas passage
- 45: cooling water path
- 46: cooling device
- 51: power shutoff unit
- 52: plug
- 53: electric power supply path
- 54: distribution board
- 54a: breaker

## Claims

1. A fuel cell system comprising:
a fuel cell configured to generate electric power using a hydrogen-containing fuel gas;
a combustible gas path including a fuel gas channel of the fuel cell;
a shutoff valve disposed on the combustible gas path, located upstream of the fuel cell, to close when the fuel cell stops generating the electric power;
a casing containing the fuel cell, the combustible gas path, and the shutoff valve;
a ventilation fan configured to ventilate the casing;
a stop unit configured to stop a ventilation operation of the ventilation fan by a manual operation of an operator; and
a controller configured to, when leakage of a combustible gas occurs in the casing, execute the ventilation operation of the ventilation fan as long as the stop unit does not stop the ventilation operation.

2. The fuel cell system according to claim 1, wherein:
the combustible gas path includes a fuel gas supply passage through which the fuel gas flows, the fuel gas being supplied from a fuel gas source to the fuel cell, the fuel gas source having positive supply pressure;
the shutoff valve is disposed on the fuel gas supply passage; and
the controller is configured such that: in a case where the combustible gas leakage is gas leakage from the combustible gas path located upstream of the shutoff valve in the casing, the controller continues the ventilation operation as long as the ventilation operation is not stopped by the stop unit; and in a case where the combustible gas leakage is gas leakage from the combustible gas path located downstream of the shutoff valve in the casing, the controller stops the ventilation operation even if the ventilation operation is not stopped by the stop unit.

3. The fuel cell system according to claim 1, further comprising:
a hydrogen generator configured to generate the fuel gas from a raw material gas, the fuel gas being used for electric power generation of the fuel cell, wherein:
the combustible gas path includes a raw material gas supply passage through which the raw material gas flows, the raw material gas being supplied from a raw material gas source to the hydrogen generator, the raw material gas source having positive supply pressure;
the shutoff valve is disposed on the raw material gas supply passage; and
the controller is configured such that: in a case where the combustible gas leakage is gas leakage from the combustible gas path located upstream of the shutoff valve in the casing, the controller continues the ventilation operation as long as the ventilation operation is not stopped by the stop unit; and in a case where the combustible gas leakage is gas leakage from the combustible gas path located downstream of the shutoff valve in the casing, the controller stops the ventilation operation even if the ventilation operation is not stopped by the stop unit.

4. The fuel cell system according to claim 2 or 3, further comprising:
a water path; and
a heater configured to heat the water path, wherein
the controller is configured to cause the heater to operate as an antifreezing operation of the water path.

5. A method for operating a fuel cell system,
the fuel cell system including: a fuel cell configured to generate electric power using a hydrogen-containing fuel gas; a combustible gas path including a fuel gas channel of the fuel cell; a shutoff valve disposed on the combustible gas path, located upstream of the fuel cell, to close when the fuel cell stops generating the electric power; a casing containing the fuel cell, the combustible gas path, and the shutoff valve; and a ventilation fan configured to ventilate the casing,
the method comprising the step of, when leakage of a combustible gas occurs in the casing, executing a ventilation operation of the ventilation fan as long as the ventilation operation is not stopped by a manual operation of an operator.
